(19) Europäisches Patentamt
European Patent Office
Office européen des brevets

(11) **EP 2 594 007 B1**

(12) **FASCICULE DE BREVET EUROPEEN**

(45) Date de publication et mention de la délivrance du brevet:
**26.11.2014 Bulletin 2014/48**

(21) Numéro de dépôt: **11743123.9**

(22) Date de dépôt: **15.07.2011**

(51) Int Cl.:
***H02M 7/539*** *(2006.01)*     ***H02J 7/34*** *(2006.01)*
***H02J 7/00*** *(2006.01)*

(86) Numéro de dépôt international:
**PCT/FR2011/051697**

(87) Numéro de publication internationale:
**WO 2012/007700 (19.01.2012 Gazette 2012/03)**

(54) **DISPOSITIF D'ÉQUILIBRAGE DE LA TENSION AUX BORNES D'UN CONDENSATEUR D'UN ENSEMBLE DE CONDENSATEURS, ET SYSTÈME DE CONVERSION DE TENSION COMPORTANT UN TEL DISPOSITIF D'ÉQUILIBRAGE**

VORRICHTUNG ZUM SPANNUNGSAUSGLEICH AN DEN KLEMMEN EINES KONDENSATORS IN EINER KONDENSATORANORDNUNG SOWIE SPANNUNGSUMWANDLUNGSSYSTEM MIT EINER SOLCHEN AUSGLEICHSVORRICHTUNG

DEVICE FOR BALANCING THE VOLTAGE AT THE TERMINALS OF A CAPACITOR OF A CAPACITOR ASSEMBLY, AND VOLTAGE CONVERSION SYSTEM COMPRISING SUCH A BALANCING DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.07.2010 FR 1055790**

(43) Date de publication de la demande:
**22.05.2013 Bulletin 2013/21**

(73) Titulaire: **GE Energy Power Conversion Technology Limited**
**Rugby**
**Warwickshire CV21 1BU (GB)**

(72) Inventeur: **PERMUY, Alfred**
**F-92500 Rueil Malmaison (FR)**

(74) Mandataire: **Serjeants LLP**
**25 The Crescent**
**King Street**
**Leicester, LE1 6RX (GB)**

(56) Documents cités:
**EP-A2- 1 047 172          WO-A2-2008/138958**
**US-A1- 2005 077 879**

**Description**

La présente invention concerne un dispositif d'équilibrage de la tension aux bornes d'au moins un condensateur d'un ensemble de condensateurs, ledit ensemble de condensateurs comprenant une borne positive d'entrée, une borne négative d'entrée, N-1 condensateurs connectés en série entre les deux bornes d'entrée et reliés entre eux par des points intermédiaires, deux condensateurs extrémaux des N-1 condensateurs étant directement reliés à l'une des deux bornes d'entrée, N étant supérieur ou égal à 3, les deux bornes d'entrée et les points intermédiaires étant propres à être connectés à un dispositif de conversion d'énergie électrique susceptible de provoquer un déséquilibre de la tension aux bornes d'au moins un condensateur.

L'invention concerne également un système de conversion de tension comprenant un tel dispositif d'équilibrage.

L'invention concerne également un procédé d'équilibrage de la tension aux bornes d'un condensateur d'un ensemble de condensateurs.

On connaît un onduleur de tension à trois niveaux comprenant une borne positive d'entrée, une borne négative d'entrée et une borne de sortie pour la ou chaque phase du courant alternatif délivré en sortie de l'onduleur, et deux condensateurs connectés en série entre la borne positive et la borne négative, les deux condensateurs étant reliés entre eux par un point milieu. L'onduleur comprend, pour chaque borne de sortie, un module de commutation de la tension continue d'entrée, chaque module de commutation étant connecté entre les deux bornes d'entrée et la borne de sortie respective. Lorsque la tension et le courant en sortie de l'onduleur sont symétriques par rapport au point milieu, le bilan des charges électriques au point milieu est nul sur une période du courant alternatif.

Toutefois, la valeur de la capacité des condensateurs doit être suffisamment élevée afin de limiter la variation de tension au point milieu au cours d'une période du courant alternatif, ce qui engendre l'utilisation de condensateurs d'encombrement et de coût importants, lorsque le courant alternatif de sortie est un courant à basse fréquence.

On connaît également un onduleur de tension à N niveaux, où N est un nombre entier supérieur à trois, comprenant une borne positive d'entrée, une borne négative d'entrée, une borne de sortie pour la ou chaque phase du courant alternatif de sortie, et un ensemble de condensateurs comportant N-1 condensateurs connectés en série entre les deux bornes d'entrée et reliés entre eux par des points intermédiaires, deux condensateurs extrémaux des N-1 condensateurs étant directement reliés à l'une des deux bornes d'entrée. L'onduleur de tension à N niveaux comprend, pour chaque borne de sortie, un module de commutation de la tension continue d'entrée, chaque module de commutation étant connecté entre les deux bornes d'entrée et la borne de sortie respective. L'onduleur de tension à N niveaux comprend également des moyens d'équilibrage de la tension aux bornes de chacun des N-1 condensateurs par ajout d'une composante homopolaire de mode commun sur chacune des phases du courant alternatif de sortie, le décalage entre les phases permettant de charger ou de décharger les condensateurs.

Toutefois, de tels moyens d'équilibrage sont efficaces lorsque l'amplitude de la tension alternative de sortie est inférieure à une valeur limite sensiblement égale au quart de la valeur de la tension continue d'entrée. Les moyens d'équilibrage ne permettent pas d'équilibrer correctement les charges électriques aux bornes desdits condensateurs lorsque l'amplitude du courant alternatif de sortie est supérieure à la valeur limite précitée, alors que l'intérêt des onduleurs de tension multi-niveaux est de délivrer un courant alternatif présentant une amplitude en tension élevée. Autres dispositifs d'équilibrage sont connus de WO 2008/138958 A2, EP 1047 172 A2 et US 2005/077879 A1.

Le but de l'invention est de proposer un dispositif d'équilibrage permettant d'équilibrer la tension en chacun des points intermédiaires de l'ensemble de condensateurs quelle que soit la tension et le courant délivré par le dispositif de conversion propre à être connecté entre les bornes d'entrée.

A cet effet, l'invention a pour objet un dispositif d'équilibrage du type précité, caractérisé en ce que qu'il comprend au moins un module d'équilibrage de la tension aux bornes de chacun des N-1 condensateurs, le module d'équilibrage étant connecté entre les deux bornes d'entrée et comportant des moyens de détermination de la quantité de charges en excès ou en défaut en chacun des points intermédiaires, un élément de stockage temporaire d'énergie électrique comportant deux bornes, des premiers moyens de guidage de courant propres à extraire des charges électriques depuis un point intermédiaire vers une borne de l'élément de stockage temporaire, des seconds moyens de guidage de courant propres à injecter des charges électriques depuis l'autre borne de l'élément de stockage temporaire vers un point intermédiaire, et un organe de commande des premiers et seconds moyens de guidage propre à commander les premiers moyens de guidage de manière à extraire des charges d'au moins un point intermédiaire présentant un excès de charges et les seconds moyens de guidage de manière à injecter les charges à au moins un point intermédiaire présentant un déficit de charges, et

en ce qu'une borne de l'élément de stockage temporaire est propre à être connectée à la borne positive d'entrée, respectivement à la borne négative d'entrée , via les premiers moyens de guidage et l'autre borne de l'élément de stockage temporaire est propre à être connectée à la borne négative d'entrée, respectivement à la borne positive d'entrée, via les seconds moyens de guidage, pour accroître, respectivement réduire, l'énergie stockée dans l'élément de stockage temporaire.

Suivant d'autres modes de réalisation, le dispositif d'équilibrage comprend une ou plusieurs des caractéristiques suivantes, prises isolément ou suivant toutes les combinaisons techniquement possibles :

- l'élément de stockage temporaire comporte au moins une bobine électromagnétique,
- chacun des premiers et seconds moyens de guidage comporte N-1 interrupteurs et N-1 diodes,
- les interrupteurs des premiers moyens sont connectés en série entre la borne positive d'entrée et une borne de l'élément de stockage, et reliés entre eux par des points de connexion, deux interrupteurs extrémaux des N-1 interrupteurs étant directement reliés à l'une des deux bornes parmi la borne positive et la borne de l'élément de stockage, N-2 diodes des premiers moyens sont connectées en direct entre un point intermédiaire respectif et un point de connexion respectif des premiers moyens, et l'autre diode des premiers moyens est connectée en direct entre la borne négative d'entrée et la borne de l'élément de stockage, et
  les interrupteurs des seconds moyens sont connectés en série entre la borne négative d'entrée et l'autre borne de l'élément de stockage, et reliés entre eux par des points de connexion, deux interrupteurs extrémaux des N-1 interrupteurs étant directement reliés à l'une des deux bornes parmi la borne négative et l'autre borne de l'élément de stockage, N-2 diodes des seconds moyens sont connectées en inverse entre un point intermédiaire respectif et un point de connexion respectif des seconds moyens, et l'autre diode des seconds moyens est connectée en inverse entre la borne positive d'entrée et l'autre borne de l'élément de stockage,
- les interrupteurs des premiers moyens sont connectés en parallèle entre la borne de l'élément de stockage et un point parmi la borne positive d'entrée et les points intermédiaires, N-2 diodes des premiers moyens sont connectées en série avec lesdits interrupteurs connectés entre la borne de l'élément de stockage et les points intermédiaires et en direct entre les points intermédiaires et la borne, et l'autre diode des premiers moyens est connectée en direct entre la borne négative d'entrée et la borne de l'élément de stockage, et
  les interrupteurs des seconds moyens sont connectés en parallèle entre l'autre borne de l'élément de stockage et un point parmi la borne négative d'entrée et les points intermédiaires , N-2 diodes des seconds moyens sont connectées en série avec lesdits interrupteurs connectés entre l'autre borne de l'élément de stockage et les points intermédiaires et en inverse entre les points intermédiaires et l'autre borne, et l'autre diode des seconds moyens est connectée en inverse entre la borne positive d'entrée et l'autre borne de l'élément de stockage,
- les moyens de détermination de la quantité de charges en excès ou en défaut comportent des moyens de mesure de la tension aux bornes d'entrée et en chacun des points intermédiaires.

L'invention a également pour objet un système de conversion d'une tension continue d'entrée en une tension alternative de sortie comportant au moins une phase, du type comprenant,

- une borne positive d'entrée, une borne négative d'entrée, et une borne de sortie pour la ou chaque phase,
- un ensemble de condensateurs comportant N-1 condensateurs connectés en série entre les deux bornes d'entrée et reliés entre eux par des points intermédiaires, deux condensateurs extrémaux des N-1 condensateurs étant directement reliés à l'une des deux bornes d'entrée, N étant supérieur ou égal à 3,
- pour chaque borne de sortie, un module de commutation de la tension continue d'entrée, chaque module de commutation étant connecté entre les deux bornes d'entrée et la borne de sortie respective, et étant propre à convertir la tension continue d'entrée en la phase respective de la tension alternative de sortie,
- des moyens de commande de chaque module de commutation,

caractérisé en ce qu'il comprend un dispositif d'équilibrage selon l'une quelconque des revendications précédentes, le dispositif d'équilibrage étant connecté entre les deux bornes d'entrée.
Suivant d'autres modes de réalisation, le système de conversion comprend une ou plusieurs des caractéristiques suivantes, prises isolément ou suivant toutes les combinaisons techniquement possibles :

- le module de commutation comprend deux branches extrêmes et N-2 branches intermédiaires, chaque branche extrême est connectée entre une borne d'entrée respective et ladite borne de sortie, et comporte N-1 interrupteurs connectés en série et reliés entre eux par des points milieux, et chaque branche intermédiaire est connectée à un point intermédiaire respectif et comporte deux diodes, la première diode étant connectée en direct entre ledit point intermédiaire respectif et un point milieu respectif d'une des deux branches extrêmes , et la seconde diode étant connectée en inverse entre ledit point intermédiaire respectif et un point milieu respectif de l'autre des deux branches extrêmes,
- le module de commutation comprend deux branches extrêmes et N-2 branches intermédiaires, chaque branche extrême comporte un interrupteur connecté entre une borne d'entrée respective et ladite borne de sortie, et chaque branche intermédiaire comporte deux interrupteurs connectés en anti-série entre un point intermédiaire respectif et ladite borne de sortie.

L'invention a également pour objet un procédé d'équilibrage de la tension aux bornes d'un condensateur d'un ensemble de condensateurs, par l'intermédiaire d'un dispositif d'équilibrage de ladite tension,

ledit ensemble de condensateurs comprenant une borne positive d'entrée, une borne négative d'entrée, N-1 condensateurs connectés en série entre les deux bornes d'entrée et reliés entre eux par des points intermédiaires, deux condensateurs extrémaux des N-1 condensateurs étant directement reliés à l'une des deux bornes d'entrée, N étant supérieur ou égal à 3, les deux bornes d'entrée et les points intermédiaires étant propres à être connectés à un dispositif de conversion d'énergie électrique susceptible de provoquer un déséquilibre de la tension aux bornes d'au moins un condensateur,

le dispositif d'équilibrage comprenant au moins un module d'équilibrage connecté entre les deux bornes d'entrée et comportant des moyens de détermination de la quantité de charges en excès ou en défaut en chacun des points intermédiaires, un élément de stockage temporaire d'énergie électrique comportant deux bornes, des premiers moyens de guidage de courant propres à extraire des charges électriques depuis un point intermédiaire vers une borne de l'élément de stockage temporaire, et des seconds moyens de guidage de courant propres à injecter des charges électriques depuis l'autre borne de l'élément de stockage temporaire vers un point intermédiaire,

le procédé comprenant :

- une étape d'établissement d'un courant dans l'élément de stockage temporaire jusqu'à ce que la valeur dudit courant soit supérieure à une valeur de référence, au cours de laquelle une borne de l'élément de stockage temporaire est connectée à la borne positive d'entrée via une commande correspondante des premiers moyens de guidage, l'autre borne de l'élément de stockage temporaire étant connectée à la borne négative d'entrée via une commande correspondante des seconds moyens de guidage ,
- une étape de détermination d'un point intermédiaire en excès de charges électriques et/ou d'un autre point intermédiaire en défaut de charges électriques,
- une étape d'extraction de charges du point intermédiaire en excès de charges à destination de l'élément de stockage temporaire, via une commande correspondante des premiers moyens de guidage, et/ou
- une étape d'injection de charges au point intermédiaire en défaut de charges depuis de l'élément de stockage temporaire, via une commande correspondante des seconds moyens de guidage,
- une étape de mesure du courant dans l'élément de stockage temporaire à l'issue d'au moins une étape d'extraction et/ou d'injection de charges, et
- une étape de décharge de l'élément de stockage temporaire lorsque la valeur du courant mesuré lors de l'étape de mesure est supérieure à celle de la valeur de référence.

Suivant d'autres modes de réalisation, le procédé d'équilibrage comprend une ou plusieurs des caractéristiques suivantes, prises isolément ou suivant toutes les combinaisons techniquement possibles :

- chacun des premiers et seconds moyens de guidage comporte N-1 interrupteurs et N-1 diodes,
les interrupteurs des premiers moyens étant connectés en série entre la borne positive d'entrée et une borne de l'élément de stockage, et reliés entre eux par des points de connexion, deux interrupteurs extrémaux des N-1 interrupteurs étant directement reliés à l'une des deux bornes parmi la borne positive et la borne de l'élément de stockage, N-2 diodes des premiers moyens étant connectées en direct entre un point intermédiaire respectif et un point de connexion respectif des premiers moyens, et l'autre diode des premiers moyens étant connectée en direct entre la borne négative d'entrée et la borne de l'élément de stockage,
les interrupteurs des seconds moyens étant connectés en série entre la borne négative d'entrée et l'autre borne de l'élément de stockage, et reliés entre eux par des points de connexion, deux interrupteurs extrémaux des N-1 interrupteurs étant directement reliés à l'une des deux bornes parmi la borne négative et l'autre borne de l'élément de stockage, N-2 diodes des seconds moyens étant connectées en inverse entre un point intermédiaire respectif et un point de connexion respectif des seconds moyens, et l'autre diode des seconds moyens étant connectée en inverse entre la borne positive d'entrée et l'autre borne de l'élément de stockage,
lors de l'étape initiale d'établissement du courant dans l'élément de stockage temporaire, tous les interrupteurs des premiers et seconds moyens de guidage sont fermés,
lors de l'étape d'extraction de charges, la diode des premiers moyens de guidage connectée en direct au point intermédiaire en excès de charges est passante, le ou les interrupteurs des premiers moyens disposés entre ladite diode passante des premiers moyens et l'élément de stockage étant fermés, les autres interrupteurs des premiers et seconds moyens de guidage étant ouverts,
lors de l'étape d'injection de charges, la diode des seconds moyens de guidage connectée en inverse au point intermédiaire en défaut de charges est passante, le ou les interrupteurs des seconds moyens disposés entre l'élément de stockage et ladite diode passante des seconds moyens étant fermés, les autres interrupteurs des premiers et seconds moyens de guidage étant ouverts, et

lors de l'étape de décharge de l'élément de stockage, tous les interrupteurs des premiers et seconds moyens de guidage sont ouverts,

- la valeur de référence est une valeur prédéterminée,

- le procédé comprend en outre une étape de mesure d'un temps de cycle d'équilibrage, et la valeur de référence est fonction de la différence entre le temps de cycle mesuré et une valeur de temps de cycle prédéfinie,

- la valeur de référence est augmentée lorsque la différence entre le temps de cycle mesuré et la valeur de temps de cycle prédéfinie est positive, la valeur de référence est conservée lorsque la différence entre le temps de cycle mesuré et la valeur de temps de cycle prédéfinie est nulle, et la valeur de référence est diminuée lorsque la différence entre le temps de cycle mesuré et la valeur de temps de cycle prédéfinie est négative,

- le procédé comprend en outre une étape de temporisation, au cours de laquelle le point intermédiaire à partir duquel sont extraites les charges lors de l'étape d'extraction est identique au point intermédiaire vers lequel les charges sont injectées lors de l'étape d'injection, l'étape l'extraction et l'étape d'injection étant effectuées simultanément.

Ces caractéristiques et avantages de l'invention apparaîtront à la lecture de la description qui va suivre, donnée uniquement à titre d'exemple, et faite en référence aux dessins annexés, sur lesquels :

- la figure 1 est une représentation schématique d'un système de conversion selon l'invention ;
- la figure 2 est un schéma électrique d'un module d'équilibrage de la tension aux bornes de condensateurs du système de conversion de la figure 1 ;
- la figure 3 est un schéma électrique d'un module de commutation de la tension continue d'entrée du système de conversion de la figure 1 ;
- la figure 4 est un organigramme du procédé d'équilibrage selon l'invention,
- la figure 5 est un schéma électrique analogue à celui de la figure 2 selon un deuxième mode de réalisation de l'invention ; et
- la figure 6 est un schéma électrique analogue à celui de la figure 3 selon un troisième mode de réalisation de l'invention.

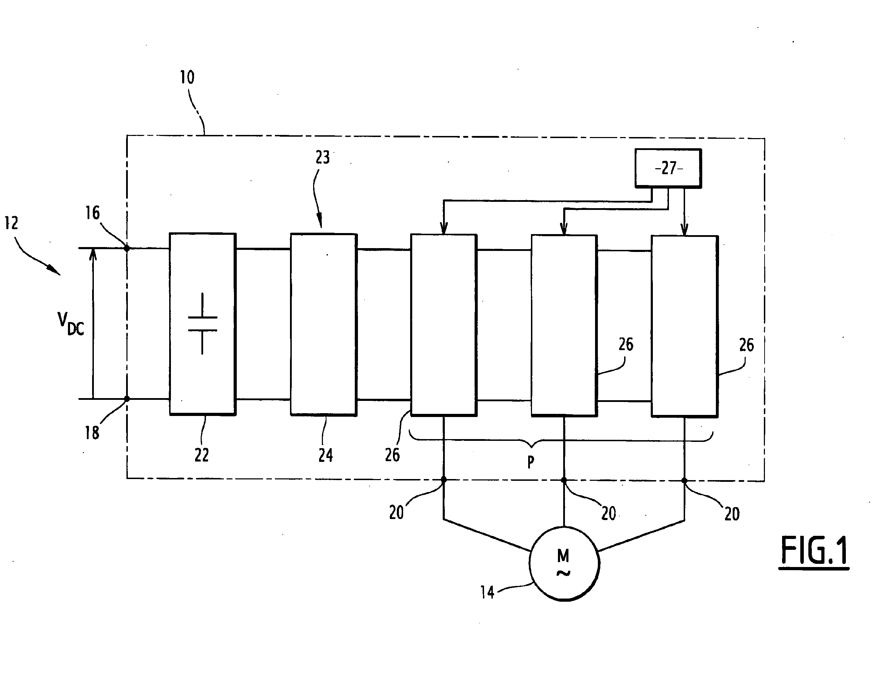

Sur la figure 1, un système de conversion 10, relié à un bus continu d'entrée 12, est propre à convertir une tension continue d'entrée en une tension alternative de sortie comportant P phases et délivrée à une machine électrique 14 connectée en sortie du système de conversion. Le système de conversion 10 est un onduleur de tension à N niveaux, où N est un nombre entier supérieur ou égal à 3.

Le système de conversion 10 comprend une borne positive d'entrée 16, une borne négative d'entrée 18, et une borne de sortie 20 pour chacune des P phases. P est un nombre entier supérieur ou égal à 1. Dans l'exemple de réalisation de la figure 1, P est égal à 3.

Le système de conversion 10 comprend un ensemble 22 de condensateurs, un dispositif 23 d'équilibrage de la tension aux bornes d'au moins un condensateur de l'ensemble, le dispositif d'équilibrage 23 comportant un module 24 d'équilibrage de ladite tension, P modules 26 de commutation de la tension continue d'entrée, et des moyens 27 de commande de chaque module de commutation 26.

En variante, le dispositif d'équilibrage 23 comprend plusieurs modules d'équilibrage 24 connectés en parallèle de l'ensemble de condensateurs 22, tel que par exemple un module d'équilibrage 24 pour chaque module de commutation 26.

La source de tension continue 12 présente une tension continue d'entrée $V_{DC}$ entre les bornes d'entrée 16, 18 du système de conversion.

La machine électrique 14 est, par exemple, un moteur électrique triphasé. Le moteur électrique 14 est, par exemple, un moteur synchrone. En variante, le moteur 14 est un moteur asynchrone.

L'ensemble de condensateurs 22, le module d'équilibrage 24 et les P modules de commutation 26 sont électriquement connectés en parallèle les uns des autres entre les deux bornes d'entrée 16, 18. Autrement dit, les deux bornes d'entrée 16, 18 sont communes à l'ensemble de condensateurs 22, au dispositif d'équilibrage 23 et aux P modules de commutation 26. Chaque module de commutation 26 est également connecté à une borne de sortie 20 respective.

Dans l'exemple de réalisation de la figure 1, le module d'équilibrage 24 est agencé mécaniquement entre l'ensemble de condensateurs 22 et les modules de commutation 26.

En variante, le module d'équilibrage 24 est agencé mécaniquement entre deux modules de commutation 26. En variante encore, les modules de commutation 26 sont agencés mécaniquement entre l'ensemble de condensateurs 22 et le module d'équilibrage 24.

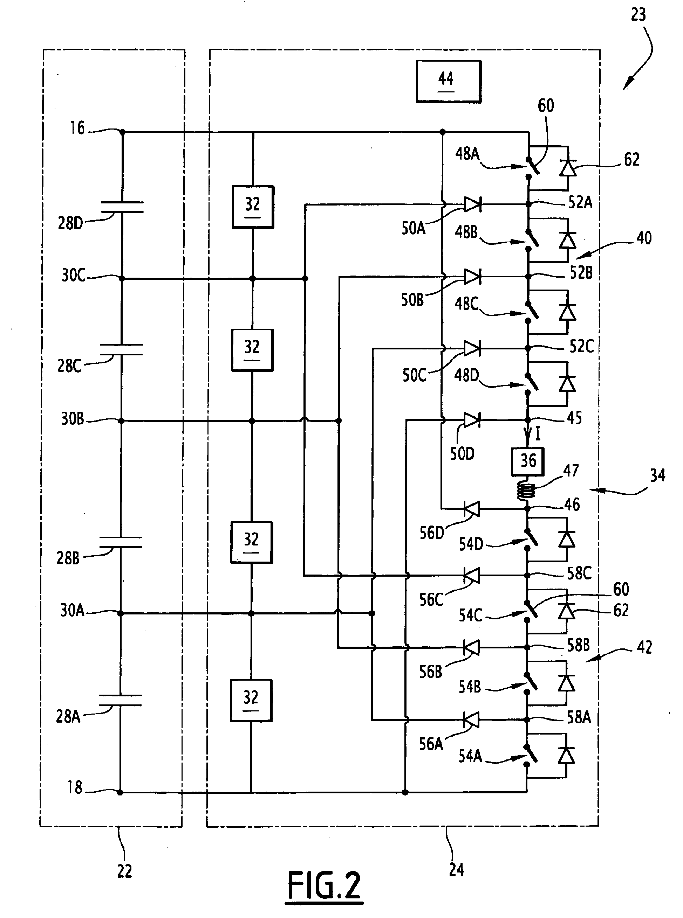

Sur la figure 2, l'ensemble de condensateurs 22 comporte N-1 condensateurs 28 connectés en série entre les deux bornes d'entrée 16, 18 et reliés entre eux par des points intermédiaires 30. Les condensateurs 28 présentent tous une même capacité C. En variante, les condensateurs 28 présentent des capacités différentes.

Dans l'exemple de réalisation de la figure 2, où N est égal à 5, les 4 condensateurs 28 sont respectivement notés 28A, 28B, 28C, 28D successivement depuis la borne négative d'entrée 18 jusqu'à la borne positive d'entrée 16, les points intermédiaires étant respectivement notés 30A, 30B, 30C.

Un condensateur extrémal 28D est directement relié à la borne positive d'entrée 16, et l'autre condensateur extrémal 28A est directement relié à la borne négative d'entrée 18.

Le module d'équilibrage 24 comporte des moyens 32 de détermination de la quantité de charges électriques en excès ou en défaut en chacun des points intermédiaires 30, un élément 34 de stockage temporaire d'énergie électrique, et des moyens 36 de mesure de l'intensité du courant circulant dans l'élément de stockage temporaire. Le module d'équilibrage 24 comporte également des premiers moyens 40 de guidage de courant propres à extraire des charges électriques depuis un point intermédiaire 30 vers l'élément de stockage temporaire 34, des seconds moyens 42 de guidage de courant propres à injecter des charges électriques depuis l'élément de stockage temporaire 34 vers un point intermédiaire 30.

Le module d'équilibrage 24 comporte également un organe 44 de commande des premiers et seconds moyens de guidage 40, 42 propre à commander les premiers moyens de guidage 40 de manière à extraire des charges d'au moins un point intermédiaire 30 présentant un excès de charges et les seconds moyens de guidage 42 de manière à injecter les charges à au moins un point intermédiaire 30 présentant un déficit de charges.

Les moyens de détermination 32 comportent des moyens de mesure de la tension aux bornes d'entrées 16,18 et en chacun des points intermédiaires 30A, 30B, 30C. Les moyens de détermination 32 sont, par exemple, des voltmètres connectés aux bornes de chacun des condensateurs 28.

L'élément de stockage temporaire 34 comporte une première borne 45, une deuxième borne 46, et une bobine électromagnétique 47 d'inductance L disposée entre les bornes 45, 46.

Les moyens de mesure 36 sont, par exemple, un ampèremètre connecté en série de l'élément de stockage temporaire 34.

Les premiers moyens de guidage 40 comportent N-1 interrupteurs 48 connectés en série entre la borne positive d'entrée 16 et la première borne 45 de l'élément de stockage, et N-1 diodes 50. Les interrupteurs 48 sont reliés entre eux par des points de connexion 52, deux interrupteurs extrémaux des N-1 interrupteurs 48 étant directement reliés à l'une des deux bornes parmi la borne positive 16 et la première borne 45 de l'élément de stockage. N-2 diodes 50 sont connectées en direct entre un point intermédiaire 30 et un point de connexion 52 respectif, et la dernière diode 50 est connectée en direct entre la borne négative d'entrée 18 et la première borne 45 de l'élément de stockage.

Dans l'exemple de réalisation de la figure 2, où N est égal à 5, les 4 interrupteurs 48 sont respectivement notés 48A, 48B, 48C, 48D successivement depuis la borne positive d'entrée 16 jusqu'à la première borne 45 de l'élément de stockage. Les 4 diodes 50 sont également notées 50A, 50B, 50C, 50D successivement depuis le point de connexion 52 le plus proche de la borne positive d'entrée 16 jusqu'à la première borne 45 de l'élément de stockage. Autrement dit, la dernière diode est notée 50D. Les points de connexion sont également notés 52A, 52B, 52C successivement depuis la borne positive 16 jusqu'à la première borne 45 de l'élément de stockage.

Les seconds moyens de guidage 42 comportent N-1 interrupteurs 54 connectés en série entre la borne négative d'entrée 18 et deuxième borne 46 de l'élément de stockage, et N-1 diodes 56. Les N-1 interrupteurs 54 sont reliés entre eux par des points de connexion 58, deux interrupteurs extrémaux des N-1 interrupteurs étant directement reliés à l'une des deux bornes parmi la borne négative 18 et la deuxième borne 46 de l'élément de stockage. N-2 diodes 56 sont connectées en inverse entre un point intermédiaire 30 et un point de connexion 58 respectif, et la dernière diode 56 est connectée en inverse entre la borne positive d'entrée 16 et la deuxième borne 46 de l'élément de stockage.

Dans l'exemple de réalisation de la figure 2, où N est égal à 5, les 4 interrupteurs 54 sont respectivement notés 54A, 54B, 54C, 54D successivement depuis la borne négative d'entrée 18 jusqu'à la deuxième borne 46 de l'élément de stockage. Par analogie, les 4 diodes 56 sont notées 56A, 56B, 56C, 56D successivement depuis le point de connexion 58 le plus proche de la borne négative 18 jusqu'à la deuxième borne 46 de l'élément de stockage. Les trois points de connexion 58 sont notés 58A, 58B, 58C successivement depuis la borne négative 18 jusqu'à la deuxième borne 46 de l'élément de stockage. Autrement dit, la dernière diode est notée 56D.

Les interrupteurs 48, 54 des premiers 40 et second 42 moyens de guidage sont, par exemple, bidirectionnels en courant et en tension. Chaque interrupteur 48, 54 est un interrupteur électronique commandable, et comporte, par exemple un transistor 60 et une diode 62 connectée en antiparallèle du transistor. Le transistor 60 est, par exemple, un transistor IGBT (de l'anglais Insulated Gate Bipolar Transistor). En variante, le transistor 60 est un transistor MOSFET (de l'anglais Metal Oxide Semiconductor Field Effect Transistor).

En variante, chaque interrupteur 48, 54 est un interrupteur électronique commandable comportant un transistor, sans présence d'une diode connectée en antiparallèle du transistor.

L'organe de commande 44 est relié à chacun des interrupteurs électroniques commandables 48, 54, et est propre à leur envoyer des signaux de commande respectifs. La première borne 45 de l'élément de stockage temporaire est propre à être connectée à la borne positive 16 via les premiers moyens de guidage 40, et la deuxième borne 46 de l'élément de stockage est propre à être connectée à la borne négative 18 via les seconds moyens de guidage 42, jusqu'à l'établissement dans l'élément de stockage temporaire 34 d'un courant de valeur supérieure à une valeur de référence $I_{ref}$.

La valeur de référence $I_{ref}$ est, par exemple, sensiblement égale à la valeur du courant débité par la phase respective d'un module de commutation 26. De manière générale, la valeur de référence $I_{ref}$ est sensiblement égale à la valeur du courant débité par une phase de sortie d'un dispositif de conversion d'énergie électrique propre à être connecté aux bornes d'entrée 16, 18 et aux points intermédiaires 30.

La valeur de référence $I_{ref}$ est, par exemple, une valeur prédéterminée. La valeur de référence $I_{ref}$ prédéterminée est, par exemple, égale à 2000 A pour un système de conversion de 10 MW présentant une tension $V_{DC}$ égale à 5 kV entre ses bornes d'entrée 16,18.

En variante, le dispositif d'équilibrage 23 comporte des moyens, non représentés, de mesure d'un temps de cycle d'équilibrage TCm, et des moyens, non représentés, de calcul de la valeur de référence $I_{ref}$ en fonction de la différence entre le temps de cycle mesuré TCm et une valeur de temps de cycle prédéfinie TC0. La valeur de temps de cycle prédéfinie TC0 est, par exemple, comprise entre 50 $\mu$s et 100 ms, de préférence comprise entre 100 $\mu$s et 10 ms.

Les moyens de calcul sont propres à augmenter la valeur de référence $I_{ref}$ lorsque la différence entre le temps de cycle mesuré TCm et la valeur de temps de cycle prédéfinie TC0 est positive, et à diminuer ladite valeur de référence $I_{ref}$ lorsque la différence entre le temps de cycle mesuré TCm et la valeur de temps de cycle prédéfinie TC0 est négative, ladite valeur de référence $I_{ref}$ étant initialement une valeur prédéterminée, par exemple égale à la valeur du courant susceptible d'être débité par la phase respective d'un module de commutation 26. La valeur de référence $I_{ref}$ n'est pas susceptible d'être modifiée par les moyens de calcul lorsque le temps de cycle mesuré TCm est égal à la valeur de temps de cycle prédéfinie TC0.

La valeur de l'inductance L de la bobine électromagnétique 47 de l'élément de stockage temporaire 34 est sensiblement égale à la valeur de la tension continue $V_{DC}$ entre les bornes d'entrée 16, 18 multipliée par le temps minimal d'un cycle d'équilibrage, et divisée par la valeur de référence $I_{ref}$.

La valeur de l'inductance L est de préférence comprise entre 100 $\mu$H et 100 mH.

La valeur de l'inductance L est, par exemple, égale à 10 mH pour une tension $V_{DC}$ égale à 5 kV, un temps de cycle de 5 ms, et une valeur de référence $I_{ref}$ égale à 2000 A. En variante, la valeur de l'inductance L est, par exemple, égale à 300 $\mu$H pour une tension $V_{DC}$ égale à 6 kV, un temps de cycle de 100 $\mu$s, et une valeur de référence $I_{ref}$ égale à 2000 A.

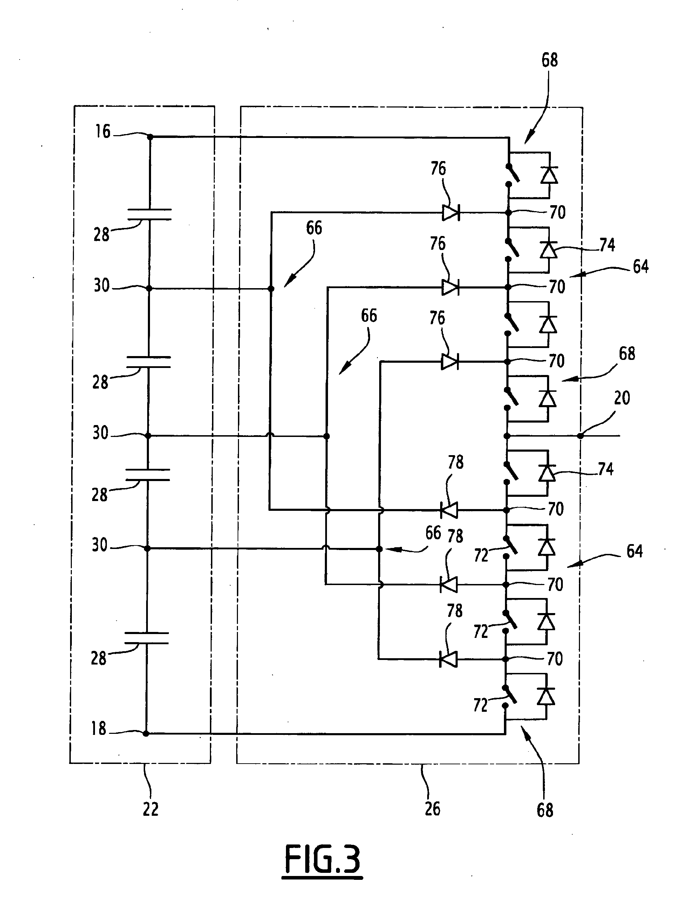

Sur la figure 3, le module de commutation 26 comprend deux branches extrêmes 64 et N-2 branches intermédiaires 66. Le module de commutation 26 présente une topologie du type clampée par le neutre, également appelée topologie NPC (de l'anglais Neutral Point Clamped).

Chaque branche extrême 64 est connectée entre une borne d'entrée 16,18 respective et la borne de sortie 20 correspondante. Chaque branche extrême 64 comporte N-1 interrupteurs 68 connectés en série et reliés entre eux par des points milieux 70. Chaque interrupteur 68 est, par exemple, un interrupteur électronique commandable, bidirectionnel en courant et en tension, et comporte un transistor 72 et une diode 74 connectée en antiparallèle du transistor. Le transistor 72 est, par exemple, un transistor IGBT.

Chaque branche intermédiaire 66 est connectée à un point intermédiaire 30 respectif de l'ensemble de condensateurs et comporte deux diodes 76, 78. La première diode 76 est connectée en direct entre ledit point intermédiaire 30 respectif et un point milieu 70 respectif d'une des deux branches extrêmes 64, la seconde diode 78 étant connectée en inverse entre ledit point intermédiaire 30 respectif et un point milieu 70 de l'autre des deux branches extrêmes 64.

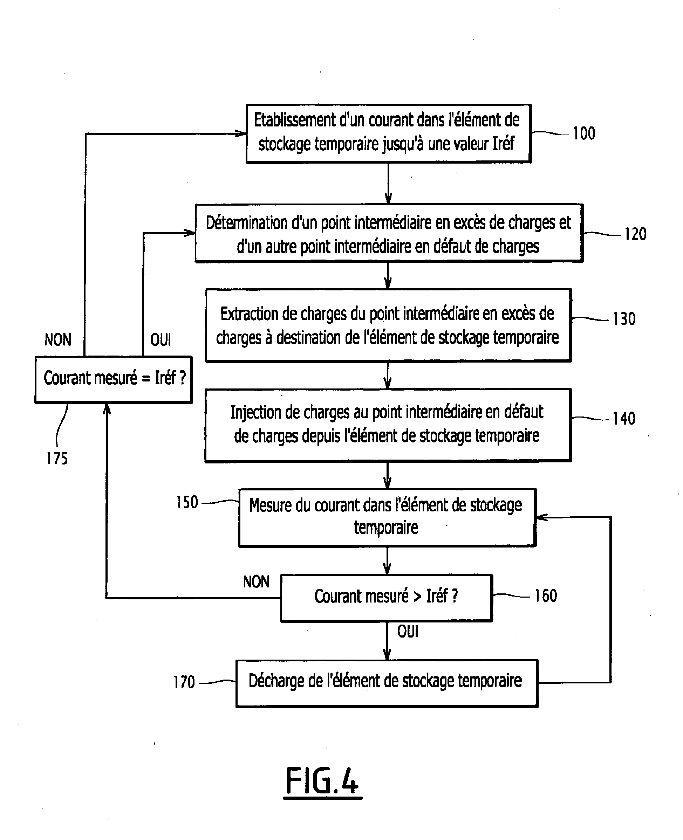

Le fonctionnement du dispositif d'équilibrage 23 va désormais être expliqué à l'aide de la figure 4 représentant un organigramme d'un procédé d'équilibrage de la tension aux bornes d'un condensateur 28 de l'ensemble de condensateurs.

L'organe de commande 44 commence par établir un courant I dans l'élément de stockage temporaire 34 jusqu'à ce que la valeur dudit courant I soit égale à la valeur de référence $I_{ref}$, en commandant la fermeture de tous les interrupteurs 48, 54 des premiers 40 et seconds 42 moyens de guidage, lors de l'étape 100. La première borne 45 de l'élément de stockage est alors connectée à la borne positive 16, et la deuxième borne 46 de l'élément de stockage est connectée à la borne négative 18.

Lors de l'étape d'établissement 100, les moyens de mesure 36 mesurent régulièrement l'intensité du courant I circulant dans l'élément de stockage temporaire 34, et transmettent cette mesure du courant I à l'organe de commande 44 afin de déterminer l'instant où le courant atteint la valeur de référence $I_{ref}$, c'est-à-dire de déterminer l'instant jusqu'auquel la fermeture de tous les interrupteurs 48, 54 doit être commandée.

A l'issue de l'étape d'établissement 100, les moyens de détermination 32 mesurent ensuite lors de l'étape 120 la tension en chacune des bornes d'entrées 16,18 et en chacun des points intermédiaires 30, également appelé noeud j, où j est un entier compris entre 0 et 4. Par convention, le noeud 0 correspond à la borne négative 18, les noeuds 1, 2 ,3 correspondent respectivement aux points intermédiaires 30A, 30B, 30C, et le noeud 4 correspond à la borne positive 16. L'écart de charges en chaque point intermédiaire 30 par rapport à l'équilibre est représenté par une variable $\Delta Q_j$ respective, déterminée suivant la formule ci-après :

$$\Delta Qj = C \times [(V_{j+1} - V_j) \cdot (V_j - V_{j-1})] \tag{1}$$

où $V_j$ représente la tension au noeud j, j variant entre 1 et 3.

Les variables $\Delta Q1$, $\Delta Q2$, $\Delta Q3$ correspondent respectivement aux noeuds 1, 2 ,3, c'est-à-dire aux points intermédiaires 30A, 30B, 30C.

Lorsque la variable $\Delta Qj$ est positive, alors le point intermédiaire 30 correspondant au noeud j présente un excès de charges électriques, et lorsque la variable $\Delta Qj$ est négative, le point intermédiaire 30 correspondant au noeud j présente un défaut de charges électriques.

Les moyens de détermination 32 déterminent alors les points intermédiaires 30 présentant un excès de charges électriques, les points intermédiaires 30 présentant un défaut de charges électriques, ainsi que les éventuels points intermédiaires 30 dont la tension est équilibrée pour lesquels la variable $\Delta Qj$ est nulle.

Des charges électriques sont ensuite extraites, lors de l'étape 130, aux points intermédiaires 30 en excès de charges, afin d'être guidées vers l'élément de stockage temporaire 34.

Les charges reçues par l'élément de stockage temporaire 34 sont injectées aux points intermédiaires 30 en déficit de charges lors de l'étape 140.

Lors de l'étape 130, respectivement lors de l'étape 140, les moyens de détermination 32 mesurent également la tension aux points intermédiaires 30 respectifs, afin de déterminer la quantité de charges restant en excès, respectivement restant en défaut, ou bien de déterminer l'instant où lesdits points intermédiaires 30 respectifs sont en équilibre de charges afin de passer à l'étape suivante.

L'extraction de charges depuis un point intermédiaire 30 en excès et/ou l'injection de charges jusqu'à un point intermédiaire 30 en déficit via l'élément de stockage temporaire 34 lors des étapes d'extraction de charges 130 et/ou d'injection de charges 140 sont réalisées par l'intermédiaire de l'organe de commande 44 envoyant des signaux de commandes aux interrupteurs 48, 54, afin de commander les interrupteurs 48, 54 suivant une loi séquentielle prédéfinie.

La loi séquentielle est telle que, lors de l'étape d'extraction de charges 130, la diode des premiers moyens de guidage 40 connectée en direct au point intermédiaire en excès est passante, le ou les interrupteurs des premiers moyens 40 disposé(s) entre ladite diode passante des premiers moyens et l'élément de stockage 34 étant fermé(s). Les autres interrupteurs des premiers moyens de guidage 40 sont ouverts.

La loi séquentielle est également telle que, lors de l'étape d'injection de charges 140, la diode des seconds moyens de guidage 42 connectée en inverse au point intermédiaire en déficit est passante, le ou les interrupteurs des seconds moyens 42 disposé(s) entre l'élément de stockage 34 et ladite diode passante des seconds moyens étant fermé(s). Les autres interrupteurs des seconds moyens de guidage 42 sont ouverts.

La loi séquentielle d'ouverture des interrupteurs est, par exemple, d'ouvrir les interrupteurs dans l'ordre suivant 48A, 48B, 48C, 48D, respectivement 54A, 54B, 54C, 54D. L'instant d'ouverture des différents interrupteurs 48, 54 dépend de la quantité de charges à transférer depuis ou vers le noeud correspondant.

La loi séquentielle d'ouverture des interrupteurs est telle que l'ouverture des seconds moyens de guidage 42 débute simultanément avec celle des premiers moyens de guidage 40. En variante, la loi séquentielle d'ouverture des interrupteurs est telle que l'ouverture des seconds moyens de guidage 42 débute successivement de celle des premiers moyens de guidage 40.

En variante, la loi séquentielle d'ouverture est l'ouverture des interrupteurs selon l'ordre suivant 54A, 54B, 54C, 54D, respectivement 48A, 48B, 48C, 48D. En variante encore, la loi séquentielle d'ouverture est selon l'ordre suivant 48A, 54A, puis 48B, 54B, puis 48C, 54C, puis 48D, 54D. En variante encore, la loi séquentielle d'ouverture est selon l'ordre suivant 54A, 48A, puis 54B, 48B, puis 54C, 48C, puis 54D 48D.

A l'issue des étapes d'extraction 130 et/ou d'injection 140, une mesure du courant I circulant dans l'élément de stockage temporaire 34 est effectuée par les moyens de mesure 36 lors de l'étape 150. Cette mesure de courant est transmise à l'organe de commande 44.

L'organe de commande 44 compare alors la valeur du courant mesuré à la valeur de référence $I_{ref}$.

Si la valeur du courant mesuré lors de l'étape de mesure 150 est supérieure à la valeur de référence $I_{ref}$, une décharge de l'élément de stockage temporaire 34 est alors effectuée lors de l'étape 170 par l'organe de commande 44 qui commande l'ouverture de tous les interrupteurs 48, 54. Si la valeur du courant mesuré lors de l'étape 150 est au contraire inférieure ou égale à la valeur de référence $I_{ref}$, l'organe de commande 44 teste, lors de l'étape 175, si la valeur du courant mesuré est égale à la valeur de référence $I_{ref}$.

Le cas échéant, les points intermédiaires 30 en excès de charges, ainsi que ceux en défaut de charges, sont à nouveau déterminés lors de l'étape 120. Sinon, c'est-à-dire si la valeur du courant mesuré est strictement inférieure à la valeur de référence $I_{ref}$, alors l'organe de commande 44 commande à nouveau la fermeture de tous les interrupteurs 48, 54 jusqu'à l'établissement d'un courant dans l'élément de stockage temporaire 34 présentant une intensité de valeur égale à la valeur de référence $I_{ref}$ (étape 100).

A titre d'exemple, en supposant que le point intermédiaire 30C est en déficit de charges et que le point intermédiaire 30A est en excès de charges, alors les interrupteurs 48, 54 sont, par exemple, commandés de la manière décrite ci-après.

A l'issue de l'étape d'établissement 100, l'organe de commande 44 commande l'ouverture des interrupteurs 48A et 54A. Ce premier état avec les seuls interrupteurs 48A et 54A est d'une durée brève et fonction du temps de commutation des interrupteurs 48A, 54A, puisqu'il n'est pas nécessaire d'extraire des charges du point intermédiaire 30C ou d'injecter des charges vers le point intermédiaire 30A.

L'organe de commande 44 commande ensuite l'ouverture des interrupteurs 48B et 54B, les interrupteurs 48A et 54A étant toujours ouverts. Ce deuxième état est également d'une durée brève et fonction du temps de commutation des interrupteurs 48B, 54B, puisqu'il n'est pas nécessaire d'extraire des charges du point intermédiaire 30B ou d'injecter des charges vers le point intermédiaire 30B.

L'organe de commande 44 commande alors l'ouverture des interrupteurs 48C et 54C, les interrupteurs 48A, 48B, 54A et 54B étant toujours ouverts. L'ouverture de l'interrupteur 48C, seul l'interrupteur 48D des premiers moyens restant fermé, permet d'extraire des charges du point intermédiaire 30A vers l'élément de stockage temporaire 34, cet état étant maintenu le temps nécessaire à l'extraction des charges en excès. De manière analogue, l'ouverture de l'interrupteur 54C, seul l'interrupteur 54D des seconds moyens restant fermé, permet d'injecter des charges depuis l'élément de stockage temporaire 34 vers le point intermédiaire 30C, cet état étant maintenu le temps nécessaire à l'injection des charges en déficit.

Il est à noter que le temps de maintien de l'ouverture de l'interrupteur 48C, seul l'interrupteur 48D des premiers moyens restant fermé, est différent du temps de maintien l'ouverture de l'interrupteur 54C, seul l'interrupteur 54D des seconds moyens restant fermé, dès lors que la quantité de charges en excès au point intermédiaire 30A diffère de la quantité de charges en déficit au point intermédiaire 30C.

L'organe de commande 44 commande enfin l'ouverture des interrupteurs 48D et 54D, les interrupteurs 48A, 48B, 48C, 54A, 54B et 54C étant toujours ouverts. Cet état correspond à un état de décharge de l'élément de stockage temporaire 34, et n'est maintenu que si la valeur du courant mesuré dans l'élément de stockage temporaire 34 est supérieure à la valeur de référence $I_{ref}$. Si la valeur du courant mesuré dans l'élément de stockage temporaire 34 est au contraire inférieure à la valeur de référence $I_{ref}$, alors l'état de décharge est d'une durée aussi brève que possible et fonction du temps de commutation des interrupteurs 48D et 54D de leur position d'ouverture vers leur position de fermeture.

A l'issue de cet état de décharge de l'élément de stockage temporaire 34, l'organe de commande 44 commande la fermeture des interrupteurs 48D et 54D, pendant une brève durée si les points intermédiaires 30A et 30C sont toujours en équilibre de charges suite à l'équilibrage précédemment effectué, ou bien pendant un durée nécessaire l'extraction des charges en excès, respectivement à l'injection des charges en déficit, si le point intermédiaire 30A est à nouveau en excès de charges, respectivement si le point intermédiaire 30C est à nouveau en déficit de charges.

L'organe de commande 44 commande ensuite la fermeture des interrupteurs 48C et 54C pendant une durée brève, les interrupteurs 48D et 54D étant toujours fermés, puis la fermeture des interrupteurs 48B et 54B également pendant une durée brève, les interrupteurs 48D, 48C, 54D et 54C étant toujours fermés, et enfin la fermeture des interrupteurs 48A et 54A pour retourner dans l'état initial où tous les interrupteurs 48, 54 sont fermés.

Les interrupteurs 48, 54 restent fermés pendant une brève durée si la valeur du courant mesuré dans l'élément de stockage temporaire 34 est supérieure ou égale à la valeur de référence $I_{ref}$. Si la valeur du courant mesuré dans l'élément de stockage temporaire 34 est au contraire inférieure à la valeur de référence $I_{ref}$, alors l'état de fermeture des interrupteurs 48, 54 est d'une durée correspondant au temps d'établissement du courant dans l'élément de stockage temporaire 34 jusqu'à la valeur de référence $I_{ref}$.

Le procédé est alors réitéré en cas d'un nouvel excès ou déficit de charges en un point intermédiaire 30.

Dans l'exemple de réalisation de la figure 4, l'équilibrage de la tension aux bornes d'un condensateur correspondant est obtenu en un cycle, correspondant à l'exécution successive des étapes 100 à 150.

Dans l'exemple de réalisation de la figure 4, la valeur de référence $I_{ref}$ est une valeur prédéterminée.

En variante, la valeur de référence $I_{ref}$ est fonction de la différence entre le temps de cycle mesuré TCm et la valeur de temps de cycle prédéfinie TC0. Par convention, le temps de cycle mesuré TCm est égal à l'intervalle de temps entre deux étapes de test 175 successives.

La valeur de temps de cycle prédéfinie TC0 est, par exemple, comprise entre 50 $\mu$s et 100 ms, de préférence comprise entre 100 $\mu$s et 10 ms.

Le procédé comprend alors en outre une étape, non représentée, de calcul de la valeur de référence $I_{ref}$. La valeur de référence $I_{ref}$ est augmentée lorsque la différence entre le temps de cycle mesuré TCm et la valeur de temps de cycle prédéfinie TC0 est positive, et la valeur de référence $I_{ref}$ est diminuée lorsque la différence entre le temps de cycle mesuré TCm et la valeur de temps de cycle prédéfinie TC0 est négative. La valeur de référence $I_{ref}$ n'est pas modifiée lorsque le temps de cycle mesuré TCm est égal à la valeur de temps de cycle prédéfinie TC0.

En complément, le procédé comprend en outre une étape de temporisation, non représentée, au cours de laquelle le point intermédiaire à partir duquel sont extraites les charges lors de l'étape d'extraction 130 est identique au point intermédiaire vers lequel les charges sont injectées lors de l'étape d'injection 140, l'étape d'extraction 130 et l'étape d'injection 140 étant effectuées simultanément. L'étape de temporisation permet ainsi de modifier la valeur du temps de cycle mesuré TCm.

Autrement dit, la valeur de référence $I_{ref}$ est asservie en fonction de la valeur du temps de cycle mesuré TCm, cette valeur étant elle-même pilotable par l'intermédiaire de l'étape de temporisation.

Le dispositif d'équilibrage selon l'invention permet ainsi d'équilibrer la tension aux bornes de chacun des condensateurs connectés entre les bornes d'entrées quelle que soit la tension et le courant délivré par le dispositif de conversion propre à être connecté entre les bornes d'entrée.

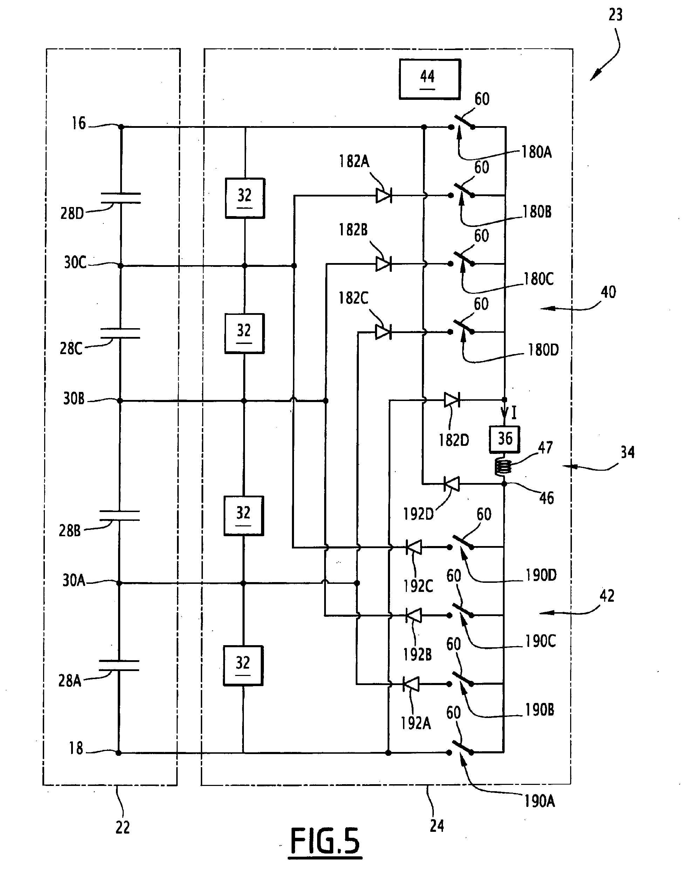

La figure 5 illustre un deuxième mode de réalisation de l'invention pour lesquels les éléments analogues au premier mode de réalisation, décrit précédemment, sont repérés par des références identiques, et ne sont donc pas décrits à nouveau.

Selon le deuxième mode de réalisation, les premiers moyens de guidage 40 comportent N-1 interrupteurs 180 connectés en parallèle entre la première borne 45 de l'élément de stockage et un point parmi la borne positive d'entrée 16 et les points intermédiaires 30, et N-1 diodes 182. N-2 diodes 182 sont connectées en série avec lesdits interrupteurs 180 connectés entre la première borne 45 de l'élément de stockage et les points intermédiaires 30 et en direct entre les points intermédiaires 30 et la première borne 45. La dernière diode 182 est connectée en direct entre la borne négative d'entrée 18 et la première borne 45 de l'élément de stockage

Dans l'exemple de réalisation de la figure 5, où N est égal à 5, les 4 interrupteurs 180 sont respectivement notés 180A, 180B, 180C, 180D successivement depuis la borne positive d'entrée 16 jusqu'à la première borne 45 de l'élément de stockage. Les 4 diodes 182 sont également notées 182A, 182B, 182C, 182D successivement depuis le point intermédiaire 30C jusqu'à la borne négative d'entrée 18. La dernière diode est notée 182D.

Les seconds moyens de guidage 42 comportent N-1 interrupteurs 190 connectés en parallèle entre la deuxième borne 46 de l'élément de stockage et un point parmi la borne négative d'entrée 18 et les points intermédiaires 30, et N-1 diodes 192. N-2 diodes 192 sont connectées en série avec lesdits interrupteurs 190 connectés entre la deuxième borne 46 de l'élément de stockage et les points intermédiaires 30 et en inverse entre les points intermédiaires 30 et la deuxième borne 46. La dernière diode 192 est connectée en inverse entre la borne positive d'entrée 16 et la deuxième borne 46 de l'élément de stockage.

Dans l'exemple de réalisation de la figure 5, où N est égal à 5, les 4 interrupteurs 190 sont respectivement notés 190A, 190B, 190C, 190D successivement depuis la borne négative d'entrée 18 jusqu'à la deuxième borne 46 de l'élément de stockage. Par analogie, les 4 diodes 192 sont notées 192A, 192B, 192C, 192D successivement depuis le point intermédiaire 30A jusqu'à la borne positive d'entrée 16. La dernière diode est notée 192D.

Les interrupteurs 180, 190 des premiers 40 et second 42 moyens de guidage sont, par exemple, bidirectionnels en courant et en tension. Chaque interrupteur 180, 190 est un interrupteur électronique commandable, et comporte, par exemple un transistor 60 et une diode 62 connectée en antiparallèle du transistor. Le transistor 60 est, par exemple, un transistor IGBT (de l'anglais Insulated Gate Bipolar Transistor). En variante, le transistor 60 est un transistor MOSFET (de l'anglais Metal Oxide Semiconductor Field Effect Transistor).

En variante, chaque interrupteur 180, 190 est un interrupteur électronique commandable comportant un transistor, sans présence d'une diode connectée en antiparallèle du transistor.

L'organe de commande 44 est relié à chacun des interrupteurs électroniques commandables 180, 190, et est propre à leur envoyer des signaux de commande respectifs.

Le fonctionnement de ce deuxième mode de réalisation est similaire à celui du premier mode de réalisation, et n'est donc pas décrit à nouveau.

Les avantages de ce deuxième mode de réalisation sont identiques à ceux du premier mode de réalisation, et ne sont donc pas décrits à nouveau.

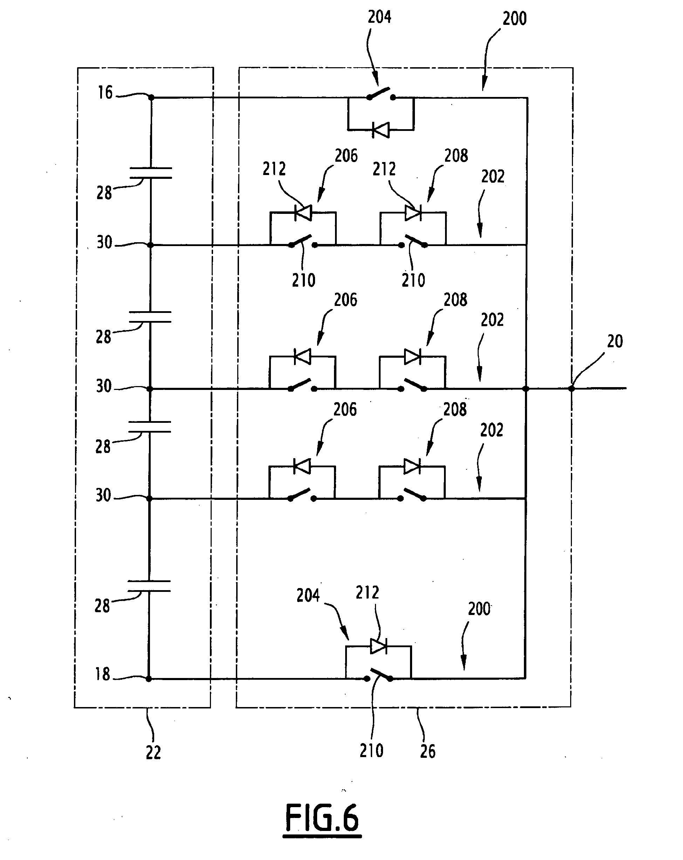

La figure 6 illustre un troisième mode de réalisation de l'invention pour lesquels les éléments analogues au premier mode de réalisation, décrit précédemment, sont repérés par des références identiques, et ne sont donc pas décrits à nouveau.

Selon le troisième mode de réalisation, le module de commutation 26 présente une topologie du type pilotée par le neutre, également appelée topologie NPP (de l'anglais Neutral Point Piloted).

Le module de commutation 26 comporte alors deux branches extrêmes 200 et N-2 branches intermédiaires 202. Chaque branche extrême 200 est connectée entre une borne d'entrée 16,18 respective et la borne de sortie 20 correspondante, et comporte un interrupteur électronique commandable 204.

Chaque branche intermédiaire 202 est connectée entre un point intermédiaire 30 respectif de l'ensemble de condensateurs et ladite borne de sortie 20, et comporte deux interrupteurs 206, 208 connectés en anti-série.

Chaque interrupteur 204, 206, 208 est, par exemple, un interrupteur électronique commandable, bidirectionnel en courant et en tension, comportant un transistor 210 et une diode 212 connectée en antiparallèle du transistor. Le transistor 210 est, par exemple, un transistor IGBT.

Le fonctionnement de ce troisième mode de réalisation est identique en ce qui concerne le dispositif d'équilibrage 23 à celui du premier mode de réalisation, et n'est donc pas décrit à nouveau.

Les avantages de ce troisième mode de réalisation sont identiques, en ce qui concerne le dispositif d'équilibrage 23, à ceux du premier mode de réalisation, et ne sont donc pas décrits à nouveau.

On conçoit ainsi que le dispositif d'équilibrage selon l'invention permet d'équilibrer la tension aux bornes de chacun des condensateurs de l'ensemble de condensateurs quelle que la tension et le courant délivré par le dispositif de conversion propre à être connecté entre les bornes d'entrée.

## Revendications

1. Dispositif d'équilibrage de la tension aux bornes d'au moins un condensateur (28) d'un ensemble de condensateurs (22), ledit ensemble de condensateurs (22) comprenant une borne positive d'entrée (16), une borne négative d'entrée (18), N-1 condensateurs (28) connectés en série entre les deux bornes d'entrée (16, 18) et reliés entre eux par des points intermédiaires (30), deux condensateurs extrémaux (28A, 28D) des N-1 condensateurs étant directement reliés à l'une des deux bornes d'entrée (16, 18), N étant supérieur ou égal à 3, les deux bornes d'entrée (16, 18) et les points intermédiaires (30) étant propres à être connectés à un dispositif de conversion d'énergie électrique susceptible de provoquer un déséquilibre de la tension aux bornes d'au moins un condensateur,

   ledit dispositif d'équilibrage étant **caractérisé en ce qu'**il comprend au moins un module (24) d'équilibrage de la tension aux bornes de chacun des N-1 condensateurs (28), le module d'équilibrage (24) étant connecté entre les deux bornes d'entrée (16, 18) et comportant des moyens (32) de détermination de la quantité de charges en excès ou en défaut en chacun des points intermédiaires (30), un élément (34) de stockage temporaire d'énergie électrique comportant deux bornes (45, 46), des premiers moyens (40) de guidage de courant propres à extraire des charges électriques depuis un point intermédiaire (30) vers une borne (45) de l'élément de stockage temporaire (34), des seconds moyens (42) de guidage de courant propres à injecter des charges électriques depuis l'autre borne (46) de l'élément de stockage temporaire (34) vers un point intermédiaire (30), et un organe (44) de commande des premiers et seconds moyens de guidage (40, 42) propre à commander les premiers moyens de guidage (40) de manière à extraire des charges d'au moins un point intermédiaire (30) présentant un excès de charges et les seconds moyens de guidage (42) de manière à injecter les charges à au moins un point intermédiaire (30) présentant un déficit de charges, et

   **en ce qu'**une borne (45) de l'élément de stockage temporaire est propre à être connectée à la borne positive d'entrée (16), respectivement à la borne négative d'entrée (18), via les premiers moyens de guidage (40) et l'autre borne (46) de l'élément de stockage temporaire est propre à être connectée à la borne négative d'entrée (18), respectivement à la borne positive d'entrée (16), via les seconds moyens de guidage (42), pour accroître, respectivement réduire, l'énergie stockée dans l'élément de stockage temporaire (34).

2. Dispositif d'équilibrage selon la revendication 1, dans lequel l'élément de stockage temporaire (34) comporte au moins une bobine électromagnétique (47).

3. Dispositif d'équilibrage selon la revendication 1 ou 2, dans lequel chacun des premiers et seconds moyens de guidage (40, 42) comporte N-1 interrupteurs (48, 54 ; 180, 190) et N-1 diodes (50, 56 ; 182, 192).

4. Dispositif d'équilibrage selon la revendication 3, dans lequel les interrupteurs (48) des premiers moyens sont connectés en série entre la borne positive d'entrée (16) et une borne (45) de l'élément de stockage, et reliés entre eux par des points de connexion (52), deux interrupteurs extrémaux (48A, 48D) des N-1 interrupteurs étant directement reliés à l'une des deux bornes parmi la borne positive (16) et la borne (45) de l'élément de stockage, N-2 diodes (50A, 50B, 50C) des premiers moyens sont connectées en direct entre un point intermédiaire (30A, 30B, 30C) respectif et un point de connexion (52A, 52B, 52C) respectif des premiers moyens, et l'autre diode (50D) des premiers moyens est connectée en direct entre la borne négative d'entrée (18) et la borne (45) de l'élément de stockage, et

   dans lequel les interrupteurs (54) des seconds moyens sont connectés en série entre la borne négative d'entrée (18) et l'autre borne (46) de l'élément de stockage, et reliés entre eux par des points de connexion (58), deux interrupteurs extrémaux (54A, 54D) des N-1 interrupteurs étant directement reliés à l'une des deux bornes parmi la borne négative (18) et l'autre borne (46) de l'élément de stockage, N-2 diodes (56A, 56B, 56C) des seconds moyens sont connectées en inverse entre un point intermédiaire (30A, 30B, 30C) respectif et un point de connexion (58A, 58B, 58C) respectif des seconds moyens, et l'autre diode (56D) des seconds moyens est connectée en inverse entre la borne positive d'entrée (16) et l'autre borne (46) de l'élément de stockage.

**5.** Dispositif d'équilibrage selon la revendication 3, dans lequel les interrupteurs (180) des premiers moyens sont connectés en parallèle entre la borne (45) de l'élément de stockage et un point parmi la borne positive d'entrée (16) et les points intermédiaires (30), N-2 diodes (182A, 182B, 182C) des premiers moyens sont connectées en série avec lesdits interrupteurs connectés entre la borne (45) de l'élément de stockage et les points intermédiaires (30) et en direct entre les points intermédiaires (30) et la borne (45), et l'autre diode (182D) des premiers moyens est connectée en direct entre la borne négative d'entrée (18) et la borne (45) de l'élément de stockage, et
dans lequel les interrupteurs (190) des seconds moyens sont connectés en parallèle entre l'autre borne (46) de l'élément de stockage et un point parmi la borne négative d'entrée (18) et les points intermédiaires (30), N-2 diodes (192A, 192B, 192C) des seconds moyens sont connectées en série avec lesdits interrupteurs connectés entre l'autre borne (46) de l'élément de stockage et les points intermédiaires (30) et en inverse entre les points intermédiaires (30) et l'autre borne (46), et l'autre diode (192D) des seconds moyens est connectée en inverse entre la borne positive d'entrée (16) et l'autre borne (46) de l'élément de stockage.

**6.** Dispositif d'équilibrage selon l'une quelconque des revendications précédentes, dans lequel les moyens de détermination (32) de la quantité de charges en excès ou en défaut comportent des moyens de mesure de la tension aux bornes d'entrée et en chacun des points intermédiaires.

**7.** Système (10) de conversion d'une tension continue d'entrée ($V_{DC}$) en une tension alternative de sortie comportant au moins une phase, du type comprenant :

- une borne positive d'entrée (16), une borne négative d'entrée (18), et une borne de sortie (20) pour la ou chaque phase,
- un ensemble de condensateurs (22) comportant N-1 condensateurs (28) connectés en série entre les deux bornes d'entrée (16, 18) et reliés entre eux par des points intermédiaires (30), deux condensateurs extrémaux (28A, 28D) des N-1 condensateurs étant directement reliés à l'une des deux bornes d'entrée (16, 18), N étant supérieur ou égal à 3,
- pour chaque borne de sortie (20), un module (26) de commutation de la tension continue d'entrée ($V_{DC}$), chaque module de commutation (26) étant connecté entre les deux bornes d'entrée (16, 18) et la borne de sortie (20) respective, et étant propre à convertir la tension continue d'entrée ($V_{DC}$) en la phase respective de la tension alternative de sortie,
- des moyens (27) de commande de chaque module de commutation,

**caractérisé en ce qu'**il comprend un dispositif d'équilibrage selon l'une quelconque des revendications précédentes, le dispositif d'équilibrage étant connecté entre les deux bornes d'entrée (16, 18).

**8.** Système de conversion (10) selon la revendication 7, dans lequel le module de commutation (26) comprend deux branches extrêmes (64) et N-2 branches intermédiaires (66), dans lequel chaque branche extrême (64) est connectée entre une borne d'entrée (16, 18) respective et ladite borne de sortie (20), et comporte N-1 interrupteurs (68) connectés en série et reliés entre eux par des points milieux (70), et dans lequel chaque branche intermédiaire (66) est connectée à un point intermédiaire (30) respectif et comporte deux diodes (76, 78), la première diode (76) étant connectée en direct entre ledit point intermédiaire (30) respectif et un point milieu (70) respectif d'une des deux branches extrêmes (64), et la seconde diode (78) étant connectée en inverse entre ledit point intermédiaire (30) respectif et un point milieu (70) respectif de l'autre des deux branches extrêmes (64).

**9.** Système de conversion (10) selon la revendication 7, dans lequel le module de commutation (26) comprend deux branches extrêmes (200) et N-2 branches intermédiaires (202), dans lequel chaque branche extrême (200) comporte un interrupteur (204) connecté entre une borne d'entrée (16, 18) respective et ladite borne de sortie (20), et dans lequel chaque branche intermédiaire (202) comporte deux interrupteurs (206, 208) connectés en anti-série entre un point intermédiaire (30) respectif et ladite borne de sortie (20).

**10.** Procédé d'équilibrage de la tension aux bornes d'au moins un condensateur (28) d'un ensemble de condensateurs (22) par l'intermédiaire d'un dispositif d'équilibrage de ladite tension,
ledit ensemble de condensateurs (22) comprenant une borne positive d'entrée (16), une borne négative d'entrée (18), N-1 condensateurs (28) connectés en série entre les deux bornes d'entrée (16, 18) et reliés entre eux par des points intermédiaires (30), deux condensateurs extrémaux (28A, 28D) des N-1 condensateurs étant directement reliés à l'une des deux bornes d'entrée (16, 18), N étant supérieur ou égal à 3, les deux bornes d'entrée (16, 18) et les points intermédiaires (30) étant propres à être connectés à un dispositif de conversion d'énergie électrique susceptible de provoquer un déséquilibre de la tension aux bornes d'au moins un condensateur,

le dispositif d'équilibrage comprenant au moins un module d'équilibrage (24) connecté entre les deux bornes d'entrée (16, 18) et comportant des moyens (32) de détermination de la quantité de charges en excès ou en défaut en chacun des points intermédiaires (30), un élément (34) de stockage temporaire d'énergie électrique comportant deux bornes (45, 46), des premiers moyens (40) de guidage de courant propres à extraire des charges électriques depuis un point intermédiaire (30) vers une borne (45) de l'élément de stockage temporaire, et des seconds moyens (42) de guidage de courant propres à injecter des charges électriques depuis l'autre borne (46) de l'élément de stockage temporaire vers un point intermédiaire (30),

le procédé comprenant :

- une étape (100) d'établissement d'un courant dans l'élément de stockage temporaire (34) jusqu'à ce que la valeur dudit courant soit supérieure à une valeur de référence ($I_{ref}$) , au cours de laquelle une borne (45) de l'élément de stockage temporaire est connectée à la borne positive d'entrée (16) via une commande correspondante des premiers moyens de guidage (40), l'autre borne (46) de l'élément de stockage temporaire étant connectée à la borne négative d'entrée (18) via une commande correspondante des seconds moyens de guidage (42),

- une étape (120) de détermination d'un point intermédiaire (30) en excès de charges électriques et/ou d'un autre point intermédiaire (30) en défaut de charges électriques,

- une étape (130) d'extraction de charges du point intermédiaire (30) en excès de charges à destination de l'élément de stockage temporaire (34), via une commande correspondante des premiers moyens de guidage (40), et/ou

- une étape (140) d'injection de charges au point intermédiaire (30) en défaut de charges depuis de l'élément de stockage temporaire (34), via une commande correspondante des seconds moyens de guidage (42),

- une étape (150) de mesure du courant dans l'élément de stockage temporaire à l'issue d'au moins une étape d'extraction (130) et/ou d'injection (140) de charges, et

- une étape (170) de décharge de l'élément de stockage temporaire lorsque la valeur du courant mesuré lors de l'étape de mesure (150) est supérieure à celle de la valeur de référence ($I_{ref}$).

11. Procédé d'équilibrage selon la revendication 10, dans lequel chacun des premiers et seconds moyens de guidage (40, 42) comporte N-1 interrupteurs (48, 54) et N-1 diodes (50, 56),

les interrupteurs (48) des premiers moyens étant connectés en série entre la borne positive d'entrée (16) et une borne (45) de l'élément de stockage, et reliés entre eux par des points de connexion (52), deux interrupteurs extrémaux (48A, 48D) des N-1 interrupteurs étant directement reliés à l'une des deux bornes parmi la borne positive (16) et la borne (45) de l'élément de stockage, N-2 diodes (50A, 50B, 50C) des premiers moyens étant connectées en direct entre un point intermédiaire ( 30A, 30B, 30C) respectif et un point de connexion (52A, 52B, 52C) respectif des premiers moyens, et l'autre diode (50D) des premiers moyens étant connectée en direct entre la borne négative d'entrée (18) et la borne (45) de l'élément de stockage, et

les interrupteurs (54) des seconds moyens étant connectés en série entre la borne négative d'entrée (18) et l'autre borne (46) de l'élément de stockage, et reliés entre eux par des points de connexion (58), deux interrupteurs extrémaux (54A, 54D) des N-1 interrupteurs étant directement reliés à l'une des deux bornes parmi la borne négative (18) et l'autre borne (46) de l'élément de stockage, N-2 diodes (56A, 56B, 56C) des seconds moyens étant connectées en inverse entre un point intermédiaire (30A, 30B, 30C) respectif et un point de connexion (58A, 58B, 58C) respectif des seconds moyens, et l'autre diode (58D) des seconds moyens étant connectée en inverse entre la borne positive d'entrée (16) et l'autre borne (46) de l'élément de stockage,

dans lequel, lors de l'étape initiale (100) d'établissement du courant dans l'élément de stockage temporaire (34), tous les interrupteurs (48, 54) des premiers et seconds moyens de guidage (40, 42) sont fermés,

dans lequel, lors de l'étape (130) d'extraction de charges, la diode des premiers moyens de guidage (40) connectée en direct au point intermédiaire en excès de charges est passante, le ou les interrupteurs des premiers moyens (40) disposés entre ladite diode passante des premiers moyens et l'élément de stockage (34) étant fermés, les autres interrupteurs des premiers et seconds moyens de guidage (40, 42) étant ouverts,

dans lequel, lors de l'étape (140) d'injection de charges, la diode des seconds moyens de guidage (42) connectée en inverse au point intermédiaire en défaut de charges est passante, le ou les interrupteurs des seconds moyens (42) disposés entre l'élément de stockage (34) et ladite diode passante des seconds moyens étant fermés, les autres interrupteurs des premiers et seconds moyens de guidage (40, 42) étant ouverts, et

dans lequel, lors de l'étape (170) de décharge de l'élément de stockage, tous les interrupteurs (48, 54) des premiers et seconds moyens de guidage (40, 42) sont ouverts.

12. Procédé d'équilibrage selon la revendication 10 ou 11, dans lequel la valeur de référence ($I_{ref}$) est une valeur prédéterminée.

**13.** Procédé d'équilibrage selon la revendication 10 ou 11, comprenant en outre une étape de mesure d'un temps de cycle d'équilibrage (TCm), dans lequel la valeur de référence ($I_{ref}$) est fonction de la différence entre le temps de cycle mesuré (TCm) et une valeur de temps de cycle prédéfinie (TCO).

**14.** Procédé d'équilibrage selon la revendication 13, dans lequel la valeur de référence ($I_{ref}$) est augmentée lorsque la différence entre le temps de cycle mesuré (TCm) et la valeur de temps de cycle prédéfinie (TC0) est positive, dans lequel la valeur de référence ($I_{ref}$) est conservée lorsque la différence entre le temps de cycle mesuré (TCm) et la valeur de temps de cycle prédéfinie (TC0) est nulle, et dans lequel la valeur de référence ($I_{ref}$) est diminuée lorsque la différence entre le temps de cycle mesuré (TCm) et la valeur de temps de cycle prédéfinie (TC0) est négative.

**15.** Procédé d'équilibrage selon l'une quelconque des revendications 10 à 14, comprenant en outre une étape de temporisation, au cours de laquelle le point intermédiaire à partir duquel sont extraites les charges lors de l'étape d'extraction (130) est identique au point intermédiaire vers lequel les charges sont injectées lors de l'étape d'injection (140), l'étape d'extraction (130) et l'étape d'injection (140) étant effectuées simultanément.

**Patentansprüche**

**1.** Einrichtung zum Ausgleichen einer Spannung an den Anschlüssen wenigstens eines Kondensator (28) einer Kondensatoranordnung (22), wobei die Kondensatoranordnung (22) einen positiven Eingangsanschluss (16), einen negativen Eingangsanschluss (18), N-1 Kondensatoren (28) aufweist, die zwischen den beiden Eingangsanschlüssen (16, 18) in Reihe geschaltet und untereinander über Zwischenpunkte (30) verbunden sind, wobei zwei äußere Kondensatoren (28A, 28D) der N-1 Kondensatoren unmittelbar mit einem der zwei Eingangsanschlüsse (16, 18) verbunden sind, wobei N größer oder gleich 3 ist, wobei die beiden Eingangsanschlüsse (16, 18) und die Zwischenpunkte (30) dazu eingerichtet sind, mit einer Einrichtung zum Wandeln elektrischer Energie verbunden zu werden, die imstande ist, eine Spannungsungleichheit an den Anschlüssen wenigstens eines Kondensators zu verursachen, wobei die Einrichtung zum Ausgleichen **dadurch gekennzeichnet ist, dass** sie wenigstens ein Modul (24) zum Ausgleichen der Spannung an den Anschlüssen jedes der N-1 Kondensatoren (28) aufweist, wobei das Modul (24) zum Ausgleichen zwischen die beiden Eingangsanschlüsse (16, 18) geschaltet ist und Mittel (32) zur Bestimmung des Ladungsmengenüberschusses oder des Ladungsmengenmangels an jedem Zwischenpunkt (30), ein Element (34) zum temporären Speichern von elektrischer Energie mit zwei Anschlüssen (45, 46), erste Leitungsmittel (40) für einen Strom, die dazu eingerichtet sind, elektrische Ladungen von einem Zwischenpunkt (30) über einen Anschluss (45) des Element zum temporären Speichern (34) abzuführen, zweite Leitungsmittel (42) für einen Strom, die dazu eingerichtet sind, elektrische Ladungen von dem anderen Anschluss (46) des Elements zum temporären Speichern (34) über einen Zwischenpunkt (30) zuzuführen, und ein Steuerorgan (44) für die ersten und zweiten Leitungsmittel (40, 42) aufweist, das dazu eingerichtet ist, die ersten Leitungsmittel (40) derart zu steuern, dass an wenigstens einem einen Ladungsüberschuss aufweisenden Zwischenpunkt (30), Ladungen abgeführt werden und die zweiten Leitungsmittel (42) derart, dass Ladungen wenigstens einem einen Ladungsmangel aufweisenden Zwischenpunkt (30) zugeführt werden, und

dadurch, dass ein Anschluss (45) des Elements zum temporären Speichern dazu eingerichtet ist, mit dem positiven Eingangsanschluss (16) bzw. dem negativen Eingangsanschluss (18) über die ersten Leitungsmittel (40) verbunden zu werden und der andere Anschluss (46) des Elements zum temporären Speichern dazu eingerichtet ist, mit dem negativen Eingangsanschluss (18) bzw. dem positiven Eingangsanschluss (16) über die zweiten Leitungsmittel (42) verbunden zu werden, um die in dem Element zum temporären Speichern (34) gespeicherte Energie zu erhöhen bzw. zu verringern.

**2.** Einrichtung zum Ausgleichen nach Anspruch 1, bei der das Element zum temporären Speichern (34) wenigstens eine elektromagnetische Spule (47) aufweist.

**3.** Einrichtung zum Ausgleichen nach Anspruch 1 oder 2, bei der jedes der ersten und zweiten Leitungsmittel (40, 42) N-1 Schalter (48, 54; 180, 190) und N-1 Dioden (50, 56; 182, 192) aufweist.

**4.** Einrichtung zum Ausgleichen nach Anspruch 3, bei der die Schalter (48) der ersten Mittel in Reihe zwischen dem positiven Eingangsanschluss (16) und einem Anschluss (45) des Speicherelements geschaltet sind und untereinander über Verbindungspunkte (52) verbunden sind, wobei zwei äußere Schalter (48A, 48D) der N-1 Schalter unmittelbar mit einem von zwei Anschlüssen, zu denen der positiven Anschluss (16) und der Anschluss (45) des Speicherelements gehört, verbunden sind, wobei N-2 Dioden (50A, 50B, 50C) des ersten Mittels in Durchgangsrichtung zwischen einen jeweiligen Zwischenpunkt (30A, 30B, 30C) und einen jeweiligen Verbindungspunkt (52A, 52B, 52C) der ersten Mittel geschaltet sind und die andere Diode (50D) der ersten Mittel in Durchgangsrichtung zwischen dem negativen Eingangsanschluss (18) und dem Anschluss (45) des Speicherelements geschaltet ist, und bei dem die Schalter (54) der zweiten Mittel in Reihe zwischen dem negativen Eingangsanschluss (18) und dem anderen Anschluss (56) des Speicherelements geschaltet und untereinander über Verbindungspunkte (58) verbunden sind, wobei zwei äußere Schalter (54A, 54D) der N-1 Schalter unmittelbar mit einem von zwei Anschlüssen, zu denen der negative Anschluss (18) und der anderen Anschluss (46) des Speicherelements gehört, verbunden sind, wobei N-2 Dioden (56A, 56B, 56C) der zweiten Mittel in Sperrrichtung zwischen einem jeweiligen Zwischenpunkt (30A, 30B, 30C) und einem jeweiligen Verbindungspunkt (58A, 58B, 58C) der zweiten Mittel geschaltet sind und die andere Diode (56D) der zweiten Mittel in Sperrrichtung zwischen dem positiven Eingangsanschluss (16) und dem anderen Anschluss (46) des Speicherelements geschaltet ist.

5. Einrichtung zum Ausgleichen nach Anspruch 3, bei dem die Schalter (180) der ersten Mittel parallel zwischen den Anschluss (45) des Speicherelements und einen Punkt, zu dem der positive Anschluss (16) und die Zwischenpunkte (30) gehören, geschaltet sind, wobei N-2 Dioden (182A, 182B, 182C) der ersten Mittel in Reihe mit den genannten zwischen den Anschluss (45) des Speicherelements und den Zwischenpunkten (30) geschalteten Schaltern und in Durchgangsrichtung zwischen die Zwischenpunkte (30) und den Anschluss (45) geschaltet sind, und wobei die andere Diode (182D) der ersten Mittel in Durchgangsrichtung zwischen den negativen Eingangsanschluss (18) und den Anschluss (45) des Speicherelements geschaltet ist und

   bei dem die Schalter (190) der zweiten Mittel parallel zwischen den anderen Anschluss (46) des Speicherelements und einen Punkt, zu dem der negative Eingangsanschluss (18) und die Zwischenpunkte (30) gehören, geschaltet sind, wobei N-2 Dioden (192A, 192B, 192C) der zweiten Mittel in Reihe mit den genannten zwischen den anderen Anschluss (46) des Speicherelements und die Zwischenpunkte (30) geschalteten Schaltern und in Sperrrichtung zwischen die Zwischenpunkte (30) und den anderen Anschluss (46) geschaltet sind, und wobei die andere Diode (192D) der zweiten Mittel in Sperrrichtung zwischen den positiven Eingangsanschluss (16) und den anderen Anschluss (46) des Speicherelements geschaltet ist.

6. Einrichtung zum Ausgleichen nach einem der vorhergehenden Ansprüche, bei dem die Mittel (32) zur Bestimmung eines Ladungsmengenüberschusses oder eines Ladungsmengenmangels ein Mittel zur Messung der Spannung zwischen den Eingangsanschlüssen und jedem der Zwischenpunkte aufweist.

7. Vorrichtung (10) zum Wandeln einer Eingangsgleichspannung ($V_{DC}$) in eine mindestens eine Phase aufweisende Ausgangswechselspannung, aufweisend:

   - einen positiven Eingangsanschluss (16), einen negativen Eingangsanschluss (18) und einen Ausgangsanschluss (20) für die oder jede Phase,
   - eine Kondensatoranordnung (22) aufweisend N-1 Kondensatoren (28), die in Reihe zwischen die beiden Eingangsanschlüssen (16, 18) geschaltet und untereinander über Zwischenpunkte (30) verbunden sind, wobei zwei äußere Kondensatoren (28A, 28D) der N-1 Kondensatoren unmittelbar mit einem der beiden Eingangsanschlüsse (16, 18) verbunden sind, wobei N größer als oder gleich 3 ist,
   - für jeden Ausgangsanschluss (20) ein Kommutierungsmodul (26) für die Eingangsgleichspannung ($V_{DC}$), wobei jedes Kommutierungsmodul (26) zwischen die beiden Eingangsanschlüsse (16, 18) und den jeweiligen Ausgangsanschluss (20) geschaltet und dazu eingerichtet ist, die Eingangsgleichspannung ($V_{DC}$) in eine jeweilige Phase der Ausgangswechselspannung zu wandeln,
   - Steuermittel (27) für jedes Kommutierungsmodul,

   **dadurch gekennzeichnet, dass** sie eine Einrichtung zum Ausgleichen nach einem der vorhergehenden Ansprüche aufweist, wobei die Einrichtung zum Ausgleichen zwischen die beiden Eingangsanschlüsse (16, 18) geschaltet ist.

8. Vorrichtung zum Wandeln (10) nach Anspruch 7, bei der das Kommutierungsmodul (26) zwei äußere Zweige (64) und N-2 Zwischenzweige (66) aufweist, bei dem jeder äußere Zweig (64) zwischen einen jeweiligen Eingangsanschluss (16, 18) und den genannten Ausgangsanschluss (20) geschaltet ist und N-1 Schalter (68) aufweist, die in Reihe geschaltet und untereinander über Mittenpunkte (70) verbunden sind und bei der jeder Zwischenzweig (66) mit einem jeweiligen Zwischenpunkt (30) verbunden ist und zwei Dioden (76, 78) aufweist, wobei die erste Diode (76) in Durchgangsrichtung zwischen den jeweiligen genannten Zwischenpunkt (30) und einen jeweiligen Mittenpunkt (70) von einem der beiden äußeren Zweige (64) geschaltet ist, und die zweite Diode (78) in Sperrrichtung zwischen den jeweiligen genannten Zwischenpunkt (30) und einen jeweiligen Mittenpunkt (70) des anderen der beiden äußeren Zweige (64) geschaltet ist.

9. Vorrichtung zum Wandeln (10) nach Anspruch 7, bei der das Kommutierungsmodul (26) zwei äußere Zweige (200) und N-2 Zwischenzweige (202) aufweist, bei der jeder äußere Zweig (200) einen Schalter (204) aufweist, der zwischen einen jeweiligen Eingangsanschluss (16, 18) und den genannten Ausgangsanschluss (20) geschaltet ist und bei der jeder Zwischenzweig (202) zwei Schalter (206, 208) aufweist, die antiseriell zwischen einen jeweiligen Zwischenpunkt (30) und den genannten Ausgangsanschluss (20) geschaltet sind.

10. Verfahren zum Ausgleichen der Spannung zwischen zwei Anschlüssen wenigstens eines Kondensators (28) einer Kondensatoranordnung (22) mittels einer Einrichtung zum Ausgleichen dieser Spannung,
   wobei diese Kondensatoranordnung (22) einen positiven Eingangsanschluss (16), einen negativen Eingangsanschluss (18), N-1 Kondensatoren (28) aufweist, die in Reihe zwischen die beiden Eingangsanschlüsse (16, 18) geschaltet und untereinander über Zwischenpunkte (30) verbunden sind, wobei zwei äußere Kondensatoren (28A, 28D) der N-1 Kondensatoren unmittelbar mit einem der beiden Eingangsanschlüsse (16, 18) verbunden sind, wobei N größer als oder gleich 3 ist, wobei die beiden Eingangsanschlüsse (16, 18) und die Zwischenpunkte (30) dazu eingerichtet sind, mit einer Einrichtung zum Wandeln elektrischer Energie verbunden zu werden, die imstande ist, eine Spannungsungleichheit an den Anschlüssen wenigstens eines Kondensators hervorzurufen,
   wobei die Einrichtung zum Ausgleichen mindestens ein Ausgleichsmodul (24) aufweist, das zwischen die beiden Eingangsanschlüsse (16, 18) geschaltet ist und Mittel (32) zur Bestimmung eines Ladungsmengenüberschusses oder Ladungsmengenmangels an jedem der Zwischenpunkte (30), ein Element (34) zum temporären Speichern elektrischer Energie mit zwei Anschlüssen (45, 46), erste Leitungsmittel (40) für einen Strom, die dazu eingerichtet sind, elektrische Ladungen von einem Zwischenpunkt (30) über einen Anschluss (45) des Elements zum temporären Speichern abzuführen, und zweite Leitungsmittel (42) für einen Strom aufweist, die dazu eingerichtet sind, elektrische Ladungen von dem anderen Anschluss (46) des Elements zum temporären Speichern über einen Zwischenpunkt (30) zuzuführen,
   wobei das Verfahren aufweist:

   - einen Schritt (100) der Erzeugung eines Stroms in das Element zum temporären Speichern (34) bis der Wert dieses Stromes größer ist als ein Referenzwert ($I_{ref}$), in dessen Verlauf ein Anschluss (45) des Elements zum temporären Speichern durch eine entsprechende Steuerung der ersten Leitungsmittel (40) mit dem positiven Eingangsanschluss (16) verbunden wird, wobei der andere Anschluss (46) des Elements zum temporären Speichern durch eine entsprechende Steuerung der zweiten Leitungsmittel (42) mit dem negativen Eingangsanschluss (18) verbunden wird,
   - einen Schritt (120) zur Bestimmung eines Zwischenpunktes (30) mit Ladungsüberschuss und/oder eines anderen Zwischenpunktes (30) mit Ladungsmangel,
   - einen Schritt (130) zum Abführen von Ladungen von einem Zwischenpunkt (30) mit Ladungsüberschuss zu dem Element zum temporären Speichern (34) über eine entsprechende Steuerung der ersten Leitungsmittel (40) und/oder
   - einen Schritt (140) zum Zuführen von Ladungen zu einem Zwischenpunkt (30) mit Ladungsmangel von dem Element zum temporären Speichern (34) durch eine entsprechende Steuerung der zweiten Leitungsmittel (42),
   - einen Schritt (150) zur Messung des Stroms in das Element zum temporären Speichern im Anschluss an wenigstens einen Schritt des Abführens (130) und/oder des Zuführens (140) von Ladungen und
   - einen Schritt (170) zum Entladen des Elements zum temporären Speichern, wenn der in dem Schritt zur Messung (150) gemessene Stromwert größer ist als der Referenzwert ($I_{ref}$).

11. Verfahren zum Ausgleichen nach Anspruch 10, bei dem alle der ersten und zweiten Leitungsmittel (40, 42) N-1 Schalter (48, 54) und N-1 Dioden (50, 56) aufweisen,
   wobei die Schalter (48) der ersten Mittel in Reihe zwischen den positiven Eingangsanschluss (16) und einen Anschluss (45) des Speicherelements geschaltet und untereinander über Verbindungspunkte (52) verbunden sind, wobei zwei äußere Schalter (48A, 48D) der N-1 Schalter unmittelbar mit einem von zwei Anschlüssen, zu denen der positive Anschluss (16) und der Anschluss (45) des Speicherelements gehören, verbunden sind, wobei N-2 Dioden (50A, 50B, 50C) der ersten Mittel in Durchgangsrichtung zwischen einen jeweiligen Zwischenpunkt (30A, 30B, 30C) und einen jeweiligen Verbindungspunkt (52A, 52B, 52C) der ersten Mittel geschaltet sind und die andere Diode (50D) der ersten Mittel in Durchgangsrichtung zwischen den negativen Eingangsanschluss (18) und den Anschluss (45) des Speicherelements geschaltet ist, und
   die Schalter (54) der zweiten Mittel in Reihe zwischen den negativen Eingangsanschluss (18) und den anderen Anschluss (46) des Speicherelements geschaltet und untereinander über Verbindungspunkte (58) verbunden sind, wobei zwei äußere Schalter (54A, 54D) der N-1 Schalter unmittelbar mit einem von zwei Anschlüssen, zu denen der negative Anschluss (18) und der andere Anschluss (46) des Speicherelements gehören, verbunden sind, wobei N-2 Dioden (56A, 56B, 56C) der zweiten Mittel in Sperrrichtung zwischen einen jeweiligen Zwischenpunkt (30A, 30B, 30C) und einen jeweiligen Verbindungspunkt (58A, 58B, 58C) der zweiten Mittel geschaltet sind und die andere Diode (58D) der zweiten Mittel in Sperrrichtung zwischen den positiven Eingangsanschluss (16) und den anderen Anschluss (46) des Speicherelements geschaltet ist,

bei dem im Initialisierungsschritt (100) zur Erzeugung eines Stroms in das Speicherelement (34) alle Schalter (48, 54) der ersten und der zweiten Leitungsmittel (40, 42) geschlossen sind,

bei dem im Schritt (130) des Abführens von Ladungen die Diode der ersten Leitungsmittel (40), die in Durchgangsrichtung mit einem einen Ladungsüberschuss aufweisenden Zwischenpunkt verbunden ist, leitend ist, wobei der oder die Schalter der ersten Mittel (40), die zwischen dieser leitenden Diode der ersten Mittel und dem Element zum Speichern (34) angeordnet ist bzw. sind, geschlossen ist bzw. sind, wobei die anderen Schalter der ersten und zweiten Leitungsmittel (40, 42) offen sind,

bei dem im Schritt (140) des Zuführens von Ladungen, die Diode der zweiten Leitungsmittel (42) die in Sperrrichtung mit einem einen Ladungsmangel aufweisenden Zwischenpunkt verbunden ist, leitend ist, wobei der oder die Schalter der zweiten Mittel (42), die zwischen dem Element zum Speichern (34) und dieser leitenden Diode der zweiten Mittel angeordnet ist bzw. sind, geschlossen ist bzw. sind, wobei die anderen Schalter der ersten und zweiten Leitungsmittel (40, 42) offen sind und

bei dem im Schritt (170) des Entladens des Speicherelements alle Schalter (48, 54) der ersten und zweiten Leitungsmittel (40, 42) offen sind.

**12.** Verfahren zum Ausgleichen nach Anspruch 10 oder 11, bei dem der Referenzwert ($I_{ref}$) ein vorbestimmter Wert ist.

**13.** Verfahren zum Ausgleichen nach Anspruch 10 oder 11, ferner aufweisend einen Schritt zur Messung einer Zykluszeit des Ausgleichs (TCm), bei dem der Referenzwert ($I_{ref}$) eine Funktion der Differenz zwischen der gemessenen Zykluszeit (TCm) und einem vorgegebenem Zykluszeitwert (TC0) ist.

**14.** Verfahren zum Ausgleichen nach Anspruch 13, bei dem der Referenzwert ($I_{ref}$) erhöht wird, wenn die Differenz zwischen der gemessenen Zykluszeit (TCm) und dem vorgegebenen Zykluszeitwert (TC0) positiv ist, bei dem der Referenzwert ($I_{ref}$) beibehalten wird, wenn die Differenz zwischen der gemessenen Zykluszeit (TCm) und dem vorgegebenen Zykluszeitwert (TC0) null ist, und bei dem der Referenzwert ($I_{ref}$) verringert wird, wenn die Differenz zwischen der gemessenen Zykluszeit (TCm) und dem vorgegebenen Zykluszeitwert (TC0) negativ ist.

**15.** Verfahren zum Ausgleichen nach einem der Ansprüche 10 bis 14, ferner aufweisend einen Zeitsteuerschritt, in dessen Verlauf der Zwischenpunkt, von dem Ladungen während eines Schrittes zum Abführen (130) abgeführt werden, identisch ist mit einem Zwischenpunkt, über den Ladungen während eines Schritts des Zuführens (140) zugeführt werden, der Schritt des Abführens (130) und der Schritt des Zuführens (140) simultan ausgeführt werden.

**Claims**

**1.** Device for balancing the voltage across the terminals of at least one capacitor (28) in a capacitor assembly (22), said capacitor assembly (22) comprising a positive input terminal (16), a negative input terminal (18), N-1 capacitors (28) connected in series between the two input terminals (16,18) and interlinked by intermediate points (30), two end capacitors (28A, 28D) of the N-1 capacitors being directly linked to one of the two input terminals (16,18), N being greater than or equal to 3, the two input terminals (16,18) and the intermediate points (30) being suited to being connected to an electrical energy conversion device likely to provoke an imbalance in the voltage across the terminals of at least one capacitor,

said balancing device being **characterized in that** it comprises at least one module (24) for balancing the voltage across the terminals of each of the N-1 capacitors (28), the balancing module (24) being connected between the two input terminals (16, 18) and including means (32) for determining the quantity of excess or deficient charge at each of the intermediate points (30), an element (34) for temporary storage of electrical energy including two terminals (45, 46), first current guiding means (40) suited to extracting electric charge from an intermediate point (30) to a terminal (45) of the temporary storage element (34), second current guiding means (42) suited to injecting electric charge from the other terminal (46) of the temporary storage element (34) to an intermediate point (30), and a member (44) for controlling first and second guiding means (40,42) that is suited to controlling the first guiding means (40) so as to extract charge from at least one intermediate point (30) having an excess of charge and the second guiding means (42) so as to inject the charge into at least one intermediate point (30) having a deficiency of charge, and **in that** a terminal (45) of the temporary storage element is suited to being connected to the positive input terminal (16), or to the negative input terminal (18), via the first guiding means (40) and the other terminal (46) of the temporary storage element is suited to being connected to the negative input terminal (18), or to the positive input terminal (16), via the second guiding means (42), in order to respectively increase, or reduce, the energy stored in the temporary storage element (34).

2. Balancing device according to Claim 1, wherein the temporary storage element (34) includes at least one electromagnetic coil (47).

3. Balancing device according to Claim 1 or 2, wherein each of the first and second guiding means (40, 42) includes N-1 switches (48, 54; 180, 190) and N-1 diodes (50, 56; 182, 192).

4. Balancing device according to Claim 3, wherein the switches (48) of the first means are connected in series between the positive input terminal (16) and a terminal (45) of the storage element, and interlinked by connection points (52), two end switches (48A, 48D) of the N-1 switches being directly linked to one of the two terminals from among the positive terminal (16) and the terminal (45) of the storage element, N-2 diodes (50A, 50B, 50C) of the first means are directly connected between a respective intermediate point (30A, 30B, 30C) and a respective connection point (52A,52B,52C) of the first means, and the other diode (50D) of the first means is forward biased between the negative input terminal (18) and the terminal (45) of the storage element, and
wherein the switches (54) of the second means are connected in series between the negative input terminal (18) and the other terminal (46) of the storage element, and interlinked by connection points (58), two end switches (54A,54D) of the N-1 switches being directly linked to one of the two terminals from among the negative terminal (18) and the other terminal (46) of the storage element, N-2 diodes (56A,56B,56C) of the second means are reverse biased between a respective intermediate point (30A,30B,30C) and a respective connection point (58A,58B,58C) of the second means, and the other diode (56D) of the second means is reverse biased between the positive input terminal (16) and the other terminal (46) of the storage element.

5. Balancing device according to Claim 3, wherein the switches (180) of the first means are connected in parallel between the terminal (45) of the storage element and a point from among the positive input terminal (16) and the intermediate points (30), N-2 diodes (182A, 182B, 182C) of the first means are connected in series with said switches connected between the terminal (45) of the storage element and the intermediate points (30) and forward biased between the intermediate points (30) and the terminal (45), and the other diode (182D) of the first means is forward biased between the negative input terminal (18) and the terminal (45) of the storage element, and
wherein the switches (190) of the second means are connected in parallel between the other terminal (46) of the storage element and a point from among the negative input terminal (18) and the intermediate points (30), N-2 diodes (192A, 192B, 192C) of the second means are connected in series with said switches connected between the other terminal (46) of the storage element and the intermediate points (30) and reverse biased between the intermediate points (30) and the other terminal (46), and the other diode (192D) of the second means is reverse biased between the positive input terminal (16) and the other terminal (46) of the storage element.

6. Balancing device according to any one of the preceding claims, wherein the means (32) for determining the quantity of excess or deficient charge include means for measuring the voltage across the input terminals and at each of the intermediate points.

7. System (10) for converting an input DC voltage ($V_{DC}$) into an output AC voltage including at least one phase, of the type comprising:

   - a positive input terminal (16), a negative input terminal (18) and an output terminal (20) for the or each phase,
   - a capacitor assembly (22) including N-1 capacitors (28) connected in series between the two input terminals (16,18) and interlinked by intermediate points (30), two end capacitors (28A,28D) of the N-1 capacitors being directly linked to one of the two input terminals (16,18), N being greater than or equal to 3,
   - for each output terminal (20), a module (26) for switching the input DC voltage ($V_{DC}$), each switching module (26) being connected between the two input terminals (16,18) and the respective output terminal (20), and being suited to converting the input DC voltage ($V_{DC}$) into the respective phase of the output AC voltage,
   - means (27) for controlling each switching module,

   **characterized in that** it comprises a balancing device according to any one of the preceding claims, the balancing device being connected between the two input terminals (16,18).

8. Conversion system (10) according to Claim 7, wherein the switching module (26) comprises two end branches (64) and N-2 intermediate branches (66), wherein each end branch (64) is connected between a respective input terminal (16,18) and said output terminal (20), and includes N-1 switches (68) connected in series and interlinked by middle points (70), and wherein each intermediate branch (66) is connected to a respective intermediate point (30) and includes two diodes (76, 78), the first diode (76) being forward biased between said respective intermediate point (30) and a respective middle point (70) of one of the two end branches (64), and the second diode (78) being reverse biased between said respective intermediate point (30) and a respective middle point (70) of the other of the two end branches (64).

9. Conversion system (10) according to Claim 7, wherein the switching module (26) comprises two end branches (200) and N-2 intermediate branches (202), wherein each end branch (200) includes a switch (204) connected between a respective input terminal (16,18) and said output terminal (20), and wherein each intermediate branch (202) includes two switches (206,208) connected in anti-series between a respective intermediate point (30) and said output terminal (20).

10. Method for balancing the voltage across the terminals of at least one capacitor (28) in a capacitor assembly (22) by way of a device for balancing said voltage,
said capacitor assembly (22) comprising a positive input terminal (16), a negative input terminal (18), N-1 capacitors (28) connected in series between the two input terminals (16,18) and interlinked by intermediate points (30), two end capacitors (28A,28D) of the N-1 capacitors being directly linked to one of the two input terminals (16,18), N being greater than or equal to 3, the two input terminals (16,18) and the intermediate points (30) being suited to being connected to an electrical energy conversion device likely to provoke an imbalance in the voltage across the terminals of at least one capacitor,
the balancing device comprising at least one balancing module (24) connected between the two input terminals (16,18) and including means (32) for determining the quantity of excess or deficient charge at each of the intermediate points (30), an element (34) for temporary storage of electrical energy including two terminals (45, 46), first current guiding means (40) suited to extracting electric charge from an intermediate point (30) to a terminal (45) of the temporary storage element, and second current guiding means (42) suited to injecting electric charge from the other terminal (46) of the temporary storage element to an intermediate point (30),
the method comprising:

   - a step (100) of establishing a current in the temporary storage element (34) until the value of said current is greater than a reference value ($I_{ref}$), during which one terminal (45) of the temporary storage element is connected to the positive input terminal (16) via a corresponding command from the first guiding means (40), the other terminal (46) of the temporary storage element being connected to the negative input terminal (18) via a corresponding command from the second guiding means (42),
   - a step (120) of determining an intermediate point (30) with excess electric charge and/or another intermediate point (30) deficient in electric charge,
   - a step (130) of extracting charge from the intermediate point (30) with excess charge to the temporary storage element (34), via a corresponding command from the first guiding means (40), and/or
   - a step (140) of injecting charge into the intermediate point (30) deficient in charge from the temporary storage element (34), via a corresponding command from the second guiding means (42),
   - a step (150) of measuring the current in the temporary storage element at the end of at least one step of extracting (130) and/or injecting (140) charge, and
   - a step (170) of discharging the temporary storage element when the value of the current measured in the measurement step (150) is greater than that of the reference value ($I_{ref}$).

11. Balancing method according to Claim 10, wherein each of the first and second guiding means (40,42) includes N-1 switches (48,54) and N-1 diodes (50,56),
the switches (48) of the first means being connected in series between the positive input terminal (16) and a terminal (45) of the storage element, and interlinked by connection points (52), two end switches (48A, 48D) of the N-1 switches being directly linked to one of the two terminals from among the positive terminal (16) and the terminal (45) of the storage element, N-2 diodes (50A,50B,50C) of the first means being forward biased between a respective intermediate point (30A,30B,30C) respective and a respective connection point (52A,52B,52C) of the first means, and the other diode (50D) of the first means being forward biased between the negative input terminal (18) and the terminal (45) of the storage element, and
the switches (54) of the second means being connected in series between the negative input terminal (18) and the other terminal (46) of the storage element, and interlinked by connection points (58), two end switches (54A,54D) of the N-1 switches being directly linked to one of the two terminals from among the negative terminal (18) and the other terminal (46) of the storage element, N-2 diodes (56A,56B,56C) of the second means being reverse biased between a respective intermediate point (30A,30B,30C) and a respective connection point (58A,58B,58C) of the second means, and the other diode (58D) of the second means being reverse biased between the positive input terminal (16) and the other terminal (46) of the storage element,

wherein, during the initial step (100) of establishing the current in the temporary storage element (34), all the switches (48,54) of the first and second guiding means (40,42) are closed,

wherein, in the charge extracting step (130), the diode of the first guiding means (40), which diode is forward biased to the intermediate point with excess charge, is conducting, the switch or switches of the first means (40) arranged between said conducting diode of the first means and the storage element (34) being closed, the other switches of the first and second guiding means (40,42) being open,

wherein, in the charge injecting step (140), the diode of the second guiding means (42), which diode is reverse biased to the intermediate point deficient in charge, is conducting, the switch or switches of the second means (42) arranged between the storage element (34) and said conducting diode of the second means being closed, the other switches of the first and second guiding means (40,42) being open, and

wherein, in the step (170) of discharging the storage element, all the switches (48,54) of the first and second guiding means (40,42) are open.

12. Balancing device according to Claim 10 or 11, wherein the reference value ($I_{ref}$) is a predetermined value.

13. Balancing method according to Claim 10 or 11, furthermore comprising a step of measuring a balancing cycle time (TCm), wherein the reference value ($I_{ref}$) is a function of the difference between the measured cycle time (TCm) and a predefined cycle time value (TC0).

14. Balancing method according to Claim 13, wherein the reference value ($I_{ref}$) is increased when the difference between the measured cycle time (TCm) and the predefined cycle time value (TC0) is positive, wherein the reference value ($I_{ref}$) is preserved when the difference between the measured cycle time (TCm) and the predefined cycle time value (TC0) is zero, and wherein the reference value ($I_{ref}$) is decreased when the difference between the measured cycle time (TCm) and the predefined cycle time value (TC0) is negative.

15. Balancing method according to any one of Claims 10 to 14, furthermore comprising a timeout step, during which the intermediate point from which the charge is extracted in the extracting step (130) is identical to the intermediate point to which the charge is injected in the injecting step (140), the extracting step (130) and the injecting step (140) being carried out simultaneously.

FIG.1

EP 2 594 007 B1

**FIG.2**

FIG.3

Etablissement d'un courant dans l'élément de
stockage temporaire jusqu'à une valeur Iréf ——— 100

Détermination d'un point intermédiaire en excès de charges et
d'un autre point intermédiaire en défaut de charges ——— 120

Extraction de charges du point intermédiaire en excès de
charges à destination de l'élément de stockage temporaire ——— 130

Injection de charges au point intermédiaire en défaut
de charges depuis l'élément de stockage temporaire ——— 140

NON          OUI

Courant mesuré = Iréf ?

175

150 ——— Mesure du courant dans l'élément de stockage
temporaire

NON          Courant mesuré > Iréf ? ——— 160

OUI

170 ——— Décharge de l'élément de stockage temporaire

FIG.4

24

**FIG.5**

## FIG.6

**RÉFÉRENCES CITÉES DANS LA DESCRIPTION**

**Documents brevets cités dans la description**

- WO 2008138958 A2
- EP 1047172 A2
- US 2005077879 A1